(19) **Europäisches Patentamt**
**European Patent Office**
**Office européen des brevets**

(11) **EP 4 769 116 A1**

(12) **EUROPEAN PATENT APPLICATION**

(43) Date of publication:
**01.07.2026 Bulletin 2026/27**

(51) International Patent Classification (IPC):
**G06F 7/58** $^{(2006.01)}$  **G06N 7/01** $^{(2023.01)}$

(21) Application number: **24223554.7**

(22) Date of filing: **27.12.2024**

(52) Cooperative Patent Classification (CPC):
**G06F 7/588; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Imec VZW**
**3001 Leuven (BE)**

(72) Inventors:
- **GAMAGE, Sahan**
  **Cambridge, CB1 8NJ (GB)**
- **GARCIA REDONDO, Fernando**
  **Cambridge, CB43NG (GB)**

(74) Representative: **Winger**
**Mouterij 16 bus 101**
**3190 Boortmeerbeek (BE)**

(54) **UNIVERSAL MARKOV CHAIN MONTE CARLO HARDWARE**

(57)     A hardware random number generator (HW-RNG) for drawing samples from a multivariate target distribution through simulation of a Markov chain is disclosed. The HW-RNG (100) has a pipeline architecture operating in cycles. The HW-RNG comprises sets of p-bit devices (112-1; 112-2; 112-N), a programming unit (150) to program the sets of p-bit devices according to a corresponding set of adaptive proposal distributions, selection circuitry (121) to select one of the sets of p-bit devices, a sampling circuit (130) configured to produce a candidate sample from the proposal distribution associated with a selected one of the sets of p-bit devices, and a scheduling unit (140). The scheduling unit (140) is configured to accept the candidate sample with an acceptance probability, and recompute at least one of the proposal distributions that is conditionally dependent on the accepted candidate sample. A programming phase for each set of p-bit devices lasts for x cycles, and there are N > x sets of p-bit devices.

FIG. 1

EP 4 769 116 A1

**Description**

**Field of the invention**

The present invention generally relates to the field of random number generation and more specifically relates to hardware random number generators that use reconfigurable probabilistic bits (p-bits) as inputs.

**Background of the invention**

Various known sampling techniques for arbitrary random variables are software-based and the sample generation for arbitrary random variables relies on the sampling from and the transformation of uniformly distributed random variables. Moreover, most random number generators (RNGs) that sample from uniform distributions are not truly random but deterministic pseudorandom number generators. Popular approaches to sampling from an arbitrary probability distribution are, for example, the inverse sampling transform, rejection-acceptance sampling and algorithms based on Markov chain Monte Carlo. Although software-implemented random number generators for arbitrary probability distributions are available, they are inherently low-throughput and the complex software constructs of conventional RNGs that are necessary for transforming the uniformly distributed random variable to the required probability distribution are slow and energy-consuming during execution. It is therefore desirable to provide dedicated energy-efficient hardware that accelerates and scales the process of random number generation. The rise and success of probabilistic computing calls for efficient sampling hardware that enables random number generation at high throughputs.

Probabilistic bits (p-bits) have been suggested as fundamental building blocks for probabilistic computers. Hardware implemented p-bit arrays harness and exploit the randomness inherent to rapidly fluctuating physical systems, which makes them promising candidates for hardware-built high-throughput random number generators. In P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022, the authors disclose sample generation for a Gaussian probability distribution based on random binary sequences from a network of tunable p-bit generator cells. A disadvantage of the disclosed method is that one can only sample Gaussian distributions.

Probabilistic workloads that benefit from high-throughput p-bit generation range from security system to cryptography, computational statistics, robotics, machine learning and artificial intelligence, meteorology and climate simulations, and many others. With the advent of hardware devices for probabilistic bit generation, the search for hardware-based solutions to the problem of an efficient sampling of arbitrary random variables becomes even more pressing.

Many probabilistic computing applications like Bayesian Neural Networks, simulated annealing, annealer-based optimization, statistical physics modeling (e.g. Ising model), spin-networks, Markov random fields, graph-based models and graph neural networks require sampling from very high-dimensional probability distributions, probability distributions that are conditional on previous observations, or probability distributions for which an analytical expression is difficult to obtain or not existing. Monte Carlo-based sampling methods and in particular Markov Chain Monte Carlo (MCMC) sampling methods are very appreciated and heavily used tools that enable the generation of samples from challenging and intricate probability distributions.

For instance, Bayesian neural networks require extensive computations of posterior distributions that update the prior belief about network parameters in view of observed data. Computing the exact posterior distribution is challenging and sometimes even impossible. The problem is exacerbated by today's large data sets and the use of complicated models. Nonetheless, the posterior distribution and derived quantities (e.g. statistical moments, integrals, etc.) can be approximated by samples obtained with MCMC methods.

A consequence of Monte Carlo based sampling techniques like Metropolis-Hastings and MCMCT is that proposal distributions, e.g. fully conditional probability distributions, depend on previously obtained samples and therefore need to be recomputed or adapted frequently. Considering hardware-implemented RNGs, this means that the RNGs must be reconfigurable to adapt to the varying proposal distributions. Unfortunately, many conventional hardware RNGs provide limited or no reconfigurability at all. Moreover, the reconfiguration process is inefficient and slow, because the sample generation process is stalled during this time. In pipelined digital solutions, the pipeline associated with the sample generation process needs to be filled again after each reconfiguration step. This is hindering the performance of applications that require continuous and adaptable random number generation.

A significant challenge therefore arises from the need to adapt proposal distributions frequently during the MCMC sampling process. In software implementations, adjusting these distributions can introduce substantial computational overhead, slowing down the sampling process. In hardware implementations, reconfiguring random number generators to reflect updated proposal distributions can be inefficient, leading to interruptions in the sample generation process. This inefficiency is further exacerbated in pipelined digital systems, where reconfiguration can stall the pipeline and reduce overall performance.

There is a need for hardware-implemented random number generators that handle frequent reconfiguration more efficiently, without stalling the process of generating samples from an arbitrary distribution of interest and considering pipeline delays for realistic timing closure.

**Summary of the invention**

It is an object of embodiments of the present invention to provide random number generators in hardware that can be reconfigured without stalling the random number generation process.

It is a further object of embodiments of the present invention to provide circuitry that efficiently generates samples from an arbitrary probability distribution of interest, taking into account pipeline delays.

The above objective is accomplished by a hardware random number generator and method according to the present invention.

In one aspect, the present invention relates to a hardware random number generator for drawing samples from a multivariate target distribution through simulation of a Markov chain, suitable for Markov Chain Monte Carlo (MCMC) applications. The random number generator has a pipeline architecture operating in cycles and comprises sets of p-bit devices, a programming unit, selection circuitry, a sampling circuit, and a scheduling unit. The p-bit devices of each set are configured to individually generate p-bits in accordance with an adjustable expectation value. The programming unit is configured to adjust the expectation values associated with each set of p-bit devices to program the sets of p-bit devices according to a corresponding set of adaptive proposal distributions associated with the Markov chain being simulated. A programming phase associated with the programming of each set of p-bit devices by the programming unit lasts for a predetermined number of cycles, x. The selection circuitry is configured to select, based on a select signal, one of the sets of p-bit devices and transmit the p-bits generated by the selected one of the sets of p-bit devices to the sampling circuit. The sampling circuit is configured to receive the p-bits generated by a selected one of the set of p-bit devices as inputs and produce a candidate sample from the proposal distribution associated with the selected one of the sets of p-bit devices. The scheduling unit is configured to update the select signal to be applied to the selection circuitry during a next cycle, wherein the select signal is restricted to available sets of p-bit devices, not subjected to programming during the next cycle; accept the candidate sample with an acceptance probability, otherwise replace the candidate sample with a previously accepted candidate sample originating from the same set of p-bit devices, thus providing an output sample from the target distribution; and recompute at least one of the proposal distributions that is conditionally dependent on the candidate sample, if accepted, and provide feedback to the programming unit by instructing the programming unit to reprogram one of the sets of p-bit devices according to recomputed at least one proposal distribution the during the next cycle. There are N > x sets of p-bit devices.

Embodiments of the invention in which N > x have the advantage that p-bit device sets are available for sampling while others are being reprogrammed, avoiding stalls.

In embodiments, a latency period associated with the pipeline architecture of the hardware random number generator excluding the programming phase may be equal to y cycles, and N > x+y. This allows further latency hiding.

In embodiments suitable for performing single-component Metropolis-Hastings sampling, the scheduling unit may be configured to determine the acceptance probability as a function of the candidate sample.

In embodiments suitable for performing Gibbs sampling, the scheduling unit may be configured to always accept the candidate samples; the target distribution is a joint distribution $\pi(x1, x2, ..., xd)$ of all d random variables of the random vector, and each proposal distributions represents the distributions of a respective random variable xj of the random vector conditional on all the other random variables, $\pi(xj |x1, x2, ..., xj-1, xj+1, ..., xd)$.

In embodiments, the scheduling unit may be further configured to determine the dimension d of the random vector specified by the target distribution, determine a selection mechanism for the proposal distribution re-computation step by comparing the dimension d to the sum N+y, and select the at least one of the proposal distributions conditionally dependent on the candidate sample to be recomputed in accordance with the selection mechanism. This allows adapting the sampling strategy based on the dimensionality.

In embodiments, the scheduling unit may be configured to randomly pick one of the random variables and recompute the proposal distribution conditionally dependent on the candidate sample that represents the transition probability for the randomly picked random variable if d > x+y. This enables random-scan sampling for high dimensions.

In embodiments, the scheduling unit may be configured to sequentially pick one of the random variables in accordance with a prescribed ordering and recompute the proposal distribution conditionally dependent on the candidate sample that represents the transition probability for the sequentially picked random variable if d < x+y. This enables systematic-scan sampling for lower dimensions.

In embodiments, the hardware random number generator may further comprise a sample buffer connected between the sampling circuit and the scheduling unit. This allows decoupling the sampling and scheduling.

In embodiments, the scheduling unit may be configured to generate selection signals such that the sets of p-bit devices are selected in turn, in a round-robin manner.

In embodiments, the scheduling unit may be configured to generate configuration signals for instructing the programming unit to reprogram one of the sets of p-bit devices according to recomputed at least one proposal distribution such that the sets of p-bit devices to be programmed are addressed in turn, in a round-robin manner.

In embodiments, the control signal and the select signal may be relatively offset from each other by an amount of x or y cycles. This avoids selecting a set while it is being reprogrammed.

In embodiments, the scheduling unit may be configured to provide output samples from the target distribution after a predetermined burn-in period.

In another aspect, the present invention relates to a system comprising a plurality of hardware random number generators according to any embodiments of the first aspect. This allows parallelizing the simulation of multiple Markov chains for efficient sampling from one or multiple target distributions.

In embodiments, the system may further comprise one or more sample buffers for holding the output samples produced by the respective hardware random number generators, and a high-rank scheduling unit configured to redistribute the output samples stored in the sample buffers to the programming units of the different hardware random number generators. This enables mixing samples across the parallel Markov chains.

It is an advantage of embodiments of the present invention that they provide dedicated, energy-efficient hardware that accelerates and scales the process of random number generation.

It is an advantage of embodiments of the present invention that they enable efficient sampling hardware capable of generating random numbers at high throughputs.

It is an advantage of embodiments of the present invention that they allow sampling from arbitrary probability distributions, not limited to Gaussian distributions.

It is an advantage of embodiments of the present invention that they efficiently handle frequent reconfiguration without stalling the sample generation process, overcoming the inefficiencies and pipeline stalling problems of existing hardware random number generators.

It is an advantage of embodiments of the present invention that they provide hardware-implemented random number generators with enhanced reconfigurability, enabling continuous and adaptable random number generation.

It is an advantage of embodiments of the present invention that they can handle sampling from very high-dimensional probability distributions.

It is an advantage of embodiments of the present invention that they enhance performance for probabilistic computing applications such as Bayesian neural networks, simulated annealing, statistical physics modeling, and graph neural networks.

It is an advantage of embodiments of the present invention that the pipelined architecture allows for increased throughput by overlapping different phases of the random number generation pipeline in time, ensuring continuous operation without diminishing throughput.

It is an advantage of embodiments of the present invention that they utilize hardware-generated probabilistic bits as inputs, enabling the generation of true random numbers and harnessing the randomness inherent in rapidly fluctuating physical systems.

In embodiments, random variables of a random vector specified by the target distribution transition between new values and previous values in accordance with transition probabilities of the Markov chain, and each proposal distribution represents the transition probability for a respective one of the random variables of the random vector.

In embodiments of the invention, the scheduling unit may be configured to enable a subset of L sets of p-bit devices out of the total number of N sets of p-bit devices and restrict the select signals and configuration signals to this subset of L p-bit device sets. It is advantageous to enable a number L of p-bit device sets in systematic scan mode operation of the HW-RNG, such that L mod d = 1 and L> d. Under this condition, the random variables (RVs) of the target distribution can be scanned continuously in the same order of appearance.

It is an advantage of embodiments of the invention that samples from arbitrary distributions, e.g. arbitrary in shape and in the number of dimensions, can be generated efficiently with guaranteed high throughput.

It is an advantage of embodiment of the invention that the HW-RNG is universally applicable to target distributions to be sampled by Markov chain Monte Carlo methods executed on the HW-RNG.

It is a further advantage of embodiments of the invention that the drawing of samples from probability distributions of interest is compatible with emerging p-bit technology such as p-bit devices based on thermally activated, low-energy barrier magnetic tunnel junctions.

It is a further advantage of embodiments of the invention that the hardware-built random number generator can be implemented in standard CMOS technology.

It is a further advantage of embodiments of the invention that samples from a given generic probability distribution can be generated efficiently at every clock cycle.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, in which:

FIG. 1 is a block diagram of a hardware random number generator (HW-RNG) according to an embodiment of the present invention.

FIG. 2 illustrates the programming of a proposal distribution through adjustment of the expectation values of the corresponding set of p-bit devices according to embodiments of the present invention.

FIG. 3 is a block diagram of an exemplary sampling circuit that can be used in the candidate sampling stage of HW-RNGs according to embodiments of the present invention.

FIG. 4 is a circuit diagram of an exemplary selector circuit that can be used in the sampling circuit of FIG. 3, in accordance with embodiments of the present invention.

FIG. 5 is a circuit diagram of an exemplary detection unit related to a level-three depth stage of the binary selection tree structure of FIG. 3, which can be used in embodiments of the present invention.

FIG. 6 shows an exemplary hardware system that comprises a plurality of HW-RNGs according to embodiments of the present invention.

FIGS. 7A-7C illustrate the flow of data in a HW-RNG configured for systematic scan Gibbs sampling according to embodiments of the present invention.

FIGS. 8A-8C illustrate the flow of data in a HW-RNG configured for systematic scan Gibbs sampling of a two-dimensional target distribution according to embodiments of the present invention.

FIGS. 9A-9C illustrate the flow of data in a HW-RNG configured for systematic scan Gibbs sampling of a four-dimensional target distribution according to embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

## Detailed description of illustrative embodiments

The present invention will be described with respect to particular embodiments and certain drawings, but the invention is not limited thereto but only by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

When reference is made to the height of a tree node, this refers to the smallest number of edges that connect the tree node in question to one of the leaf nodes of the binary tree. The height of the binary tree refers to the height of the root node of the binary tree.

When reference is made to the depth of a tree node, this refers to the smallest number of edges that connect the tree node in question to the root node of the binary tree. Depth stages are associated with the set of tree nodes that have the same node depth. The depth stages of the binary tree are enumerated by increasing levels of node depth, starting with the root node as the only tree node in level-zero depth stage.

A perfect binary tree is a binary tree in which all non-leaf nodes have exactly two children and the leaf nodes all have maximum depth.

In one aspect, the invention relates to a hardware random number generator (HW-RNG) for drawing samples from a multivariate target distribution through simulation of a Markov chain. The HW-RNG is suitable for Markov Chain Monte Carlo (MCMC) applications, especially for probabilistic computing applications that require sampling from high-dimensional probability distributions or probability distributions for which a closed-form expression does not exist or cannot be evaluated easily. The multivariate target distribution, in embodiments of the invention, refers to the probability distribution of interest for which samples are obtained in good approximation through simulation of a related discrete-time Markov (chain) process. Instead of directly sampling the multivariate distribution of interest, the discrete-time Markov process relies on the formulation of conditional probabilities for transitioning towards a new observation of the random vector (defined by the multivariate target distribution) given the current and all preceding observations. Typically, the conditional probabilities are much easier to compute and sample from than the original joint distribution. A particularly useful and commonly encountered case is the first-order Markov process in which one-step transition probabilities $P(x[t+1]|x[t])$ are conditional probabilities that only depend on the current observation. Higher-order Markov processes are also dependent on observations of the recent past. It has been demonstrated that a convergent Markov chain process converges towards a unique stationary distribution that is equal to the targeted probability distribution of the random vector. A much-appreciated form of Markov Chain Monte Carlo (MCMC) sampling methods is Gibbs sampling, which involves probabilities for individual vector components that are fully conditional on all the remaining vector components. Direct Gibbs sampling of a d-dimensional random vector X means updating the d vector components in a sequential order, immediately using the previously updated vector components. That is, new samples for each vector component $xi[t+1]$, $i = 1, ..., d$ are drawn successively, using the following sequence of fully conditional probabilities: $P(x1[t+1]|x1[t], x2[t], ..., xd[t])$, $P(x2[t+1]|x1[t+1], x2[t], ..., xd[t])$, ..., $P(xd[t+1]|x1[t+1], x2[t+1], ..., xd[t])$. The updated components can then be arranged into a new sample for the random vector $X[t+1]:= (x1[t+1], x2[t+1], ..., xd[t+1])$. In random Gibbs sampling, the individual vector component to be updated next is chosen at random and all the other vector components are carried over. That is, a new $xi[t+1]$ is obtained according to $P(xi[t+1]|x1[t], x2[t], ..., x(i-1)[t], x(i+1)[t], ..., xd[t])$, where index 'i' is randomly drawn from {1, 2, ...,d}, and $xj[t+1]:=xj[t]$ for all indices j not equal to i.

In embodiments, the multivariate target distribution and the conditional transition probabilities derived therefrom can be arbitrary, e.g. arbitrary in shape and in the number of dimensions. In embodiments of the invention, the multivariate target distribution and the conditional transition probabilities derived therefrom may be joint/conditional probability mass functions (pmf), joint/conditional probability density function (pdf), or a combination of both, depending on the discrete or continuous nature of the random variables involved. For instance, a random vector composed of both discrete and continuous random variables may be defined by a probability distribution that is discrete (pmf) in some variables and continuous (pdf) in other variables. Numerically, a continuous random variable and associated pdf can be approximated by a discrete random variable and associated pmf. Multivariate target distributions can be derived from the joint probability distribution function of a multi-dimensional random vector. Samples generated by the hardware device are true random numbers, meaning that the device belongs to the class of physical or hardware random number generators (RNGs).

Contrary to conventional RNGs, e.g. software-implemented RNGs, for which output samples are constructed from pseudorandom number, the hardware device according to the invention uses hardware generated p-bits as probabilistic inputs. Here, probabilistic inputs designate the uncertain and randomly fluctuating inputs or input signals of the device as opposed to deterministic inputs (e.g. variables that are known, can be read from memory or computed without uncertainty). The HW-RNG according to embodiments of the invention can be a digital electronic circuit, digital integrated circuit, device or component that can be readily integrated into a larger probabilistic computer, probabilistic accelerator, or from part of a wider system-on chip (SoC).

As opposed to classical bits, which have a well-defined logical state (i.e., either true or false) for computational purposes, probabilistic bits (p-bits) are rapidly fluctuating classical bits that have the capability of emulating non-deterministic aspects on classical digital hardware. Large numbers of p-bits can be arranged into p-bit arrays or sets and coupled to form p-bit networks as a powerful computational resource, e.g. in the form of a coprocessor. Moreover, digital circuits can be specifically adapted to process p-bits.

For computation time spans larger than the autocorrelation lifetime of the p-bit, which depends on its physical device implementation, the rapid fluctuations average out to a deterministic value, i.e. the expectation value (also referred statistical mean or average) for the series of random transitions associated with the p-bit operation. The current state of the fluctuating p-bit device can be detected at a particular moment in time, such as at regular time intervals, to obtain a realization of the p-bit (also called observation or sample). Each realization indicates either a logical HIGH or a logical LOW state of the p-bit. The two states (i.e. LOW or HIGH) are realized with different probabilities, e.g. P(LOW) = p and P(HIGH) = 1-p, where 'p' designates the average or expectation of the random trials. This expectation value is typically a control variable for the operation of a p-bit device, meaning that the p-bit device itself or auxiliary circuitry is comprising a control means for tuning the expectation value associated with the p-bit. Tunable probabilistic bit generators based on magnetic tunnel junction stacks formed over an SOT track (spin orbit torque) have been described, e.g., in P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022. Therein, the SOT current influences the random switching behavior of the magnetoresistance of the MJT stack.

The HW-RNG in accordance with embodiments of the invention includes a plurality of p-bit devices that are arranged into sets, selection circuitry, a programming unit, and a scheduling unit. Each set of p-bit devices is programmed by the programming unit according to an adaptive proposal distribution. Here, adaptive means that the proposal distributions are not statically assigned but evolve over time, e.g. are subjected to regular updates. The scheduling unit is configured to determine the updates to or replacements of proposal distributions and instruct the programming unit to reprogram the relevant p-bit device sets accordingly. Proposal distributions are conditional distributions of the target distribution and are representative of transition probabilities (one-step or many-step) of the simulated Markov chain (process). The programming unit is configured to adjust the expectation values associated with the individual p-bit devices of each set of p-bit devices undergoing reprogramming, such that the adjusted expectation values match the probability values that define/represent the corresponding proposal distribution. Typically, the proposal distributions programmed into different sets of p-bit devices are univariate distributions and differ from each other, e.g., differ in one or more of: the choice of random variables (random vector components), the iteration time step, the initial value (e.g. in the case of parallel sampling).

For Gibbs sampling methods, the proposal distributions programmed into the different sets of p-bit devices are usually fully conditional distribution of a single component given all the other components of the random vector that is defined by the target distribution. It is noted that each component of a random vector is itself a random variable. For Metropolis-Hastings sampling methods, typical proposal distributions programmed into the different sets of p-bit devices are Gaussian distributions, location-scale t distributions, or other location-scale families of probability distributions, which describe transition probabilities between the sample of the current iteration and a candidate sample for the next iteration. The candidate sample is accepted with an acceptance probability and rejected otherwise. Once accepted, the candidate sample is treated as an ordinary sample. In single component Metropolis-Hastings sampling, the candidate sample relates to one of the components of the random vector defined by the target distribution. Accepted candidate sample for the different components can then be aggregated into a full sample for the random vector. Gibbs sampling is a special type of Metropolis-Hastings sampling in which the proposal distributions are the fully conditional distributions and the acceptance probability is always one, viz. candidate samples are always accepted with certainty.

Embodiments of the invention may also be used to implement blocking samplers, such as blocking Gibbs samplers but not limited thereto, in which blocks of random variables are updated jointly. This can be achieved by applying the forward-backward algorithm to the blocking sampling problem such that blocks of jointly updated random variables are simulated through recursions which can be programmed and executed on HW-RNGs according to embodiments of the invention.

The selection circuitry of the HW-RNG is configured to select one of the sets of p-bit devices and transmit the p-bits that are generated by the selected set of p-bit devices to the sampling circuit. That is, the selection circuitry is configured to operatively connect a selected set of p-bits to the sampling circuit, i.e. selectively connect the sampling circuit to one of the sets of p-bit devices. The selection of the p-bit device set is determined by a select signal that is generated by the scheduling unit and received by the selection circuitry. In typical embodiments, the scheduling unit generates the select signal in accordance with a sequential ordering of the sets of p-bit devices. For instance, a set index can be assigned to each set of p-bit devices that allows unique identification of this set of p-bit devices. A sequential ordering may then be obtained by arranging the set indices in increasing or decreasing order, or any permutation or reshuffling thereof. As a result, the sets of p-bit devices are selected in a round-robin fashion.

The selection circuit of the HW-RNG is configured to receive the collection of p-bits generated by the selected set of p-bit devices as inputs. Moreover, the sampling circuit is configured to produce a candidate sample from the proposal probability distribution that is associated with the selected set of p-bit devices, based on the inputs received. The sampling circuit is generally adapted to randomly choose one p-bit among the input p-bits received. The randomly chosen p-bit is indicative of the observed value of the candidate sample that is drawn from the proposal distribution. This is possible since the relative position of the chosen p-bit within the set of p-bit devices, e.g. position within a linear array of p-bit devices, correlates with a value of the random variable whose probability mass function or (discretized version of the) probability density function coincides with the proposal distribution. The candidate sample is forwarded to the scheduling unit. e.g. through an optional buffer unit that temporarily buffers the candidate samples.

The scheduling unit of the HW-RNG is configured to accept the forwarded candidate sample with an acceptance probability and replace rejected candidate samples with a previously accepted candidate sample that originated from the same set of p-bit devices. Again, the acceptance probability equals one for Gibbs sampling methods, whereby this acceptance step is rendered trivial. This means that the scheduling unit is configured to store or access a memory device that stores a previously accepted candidate samples, e.g. storing the previously accepted candidate samples with respect to each of the d dimensions of the random vector defined by the target distribution. In both cases, acceptance or replacement of candidate samples, an output sample from the target distribution is obtained. Here, output sample means a new scalar sample from one of the random variables defined by the multivariate target distribution (e.g. as in sequential scan Gibbs sampling), with the possibility to aggregate sequentially obtained samples from all the random variables of the target distribution into a new vector output sample, or a new vector output sample if the updated vector component is combined with the carried-over update-free vector components (e.g. as in random scan Gibbs sampling).

The scheduling unit is also configured to generate or refresh the select signal for the next selection of one of the p-bit device sets. Furthermore, the scheduling unit is configured to recompute, update or adapt at least one of the proposal distributions associated with the simulated Markov chain in view of the candidate sample if the candidate sample is accepted. Of course, the at least one proposal distribution that needs to be recomputed for the next generation is conditionally dependent on the accepted candidate sample. Furthermore, the scheduling unit is configured to send configuration data expressive of the recomputed at least one proposal distribution (e.g., programming-related information) to the programming unit. This configuration data also identifies one of the sets of p-bit devices to be reprogrammed, preferably the set of p-bit devices that seeded the candidate sample. For instance, the configuration data includes a set index. This way, the programming unit is instructed to reprogram the set of p-bit devices addressed by the configuration data according to the recomputed proposal distribution. The reprogramming of the sets of p-bit devices by the programming unit according to adaptations/updates in the proposal distributions provides feedback to the set of p-bit devices. Therefore, the HW-RNG implements a feedback loop.

In the HW-RNG in accordance with embodiments of the invention, the sets of p-bit devices are associated with a seeding phase or seeding stage of a random number generation pipeline, the selection circuitry is associated with a selection phase/stage of the RNG pipeline, the sampling circuit is associated with a sampling phase/stage of the RNG pipeline, the scheduling unit is associated with a scheduling phase/stage of the RNG pipeline, and the programming unit is associated with a programming phase/stage of the RNG pipeline. That is, the HW-RNG is operable as a pipeline. Owing to the pipelined architecture of the HW-RNG, throughput can be advantageously increased by overlapping the different phases of the RNG pipeline in time. The phases of the RNG pipeline work in parallel but each phase of the RNG pipeline processes data related to different output samples.

The HW-RNG operates in cycles to move data (p-bits, candidate samples, programming-related data) across the stages of the RNG pipeline. The cycles may be derived from a clock signal generated or received by the HW-RNG. This enables synchronization of the different stages of the RNG pipeline. Furthermore, each of the stages of the RNG pipeline typically has some latency or processing delay associated with it, which can be expressed in terms of the number of cycles it takes before an input to this stage results in an output of this stage. The programming phase, associated with the programming of an individual one of the sets of p-bit devices by the programming unit, lasts for a predetermined number of cycles x. A minimum latency period between completing one and starting the other one of two consecutive programming phases relating to the same set of p-bits lasts for a predetermined number of cycles, y. This minimum latency of y cycles is typically equal to the delay of the RNG pipeline, excluding the latency of the programming phase. In other words, the sum x+y equals the roundtrip time of the feedback loop of the HW-RNG, e.g. the total latency associated with the closed-loop RNG pipeline.

In embodiments of the invention, the select signal is preferably restricted to available sets of p-bit devices, not subjected to programming during the next cycle. If resampling from the same proposal distribution, not yet updated for the next iteration of the simulated Markov chain, is not desirable, the select signal is preferably restricted to available sets of p-bit devices from which none of the candidate samples of the last y cycles originated. However, these two restriction conditions are usually fulfilled in HW-RNGs in accordance with embodiments of the invention, which comprise a sufficiently large number of p-bit device sets, N. Here, sufficiently large can mean N > x+y. It is noted that N > x+y is not a mandatory inequality. Indeed, there may be applications in which resampling from the same unmodified proposal distribution is desirable. For example, a rejected candidate sample may be resampled more frequently. Furthermore, two identical and independent proposal distributions may be simulated by a single programmed proposal distribution that is sampled twice.

To avoid that the sequential selection of one of the p-bit device sets collides with the reprogramming phase of the same, the number of p-bit device sets within the HW-RNG, N, is preferably N > x. Moreover, to ensure that none of the sets of p-bit devices is reprogrammed before it receives feedback about its previously seeded and successfully accepted candidate sample, e.g. feedback in form of an adapted proposal distribution conditional on the previously seeded and successfully accepted candidate sample, the number of p-bit device sets within the HW-RNG, N, is preferably N > x+y.

The optional buffer unit connected between the sampling circuit and the scheduling unit may be configured to hold candidate samples, e.g. have an associated buffer capacity of holding at least d candidate samples, where 'd' designates the number of dimensions of the target distribution. The buffer unit may be implemented as a FIFO-like buffer. It is an advantage of the buffer unit that the RNG pipeline performance can be improved and timing constraints met more easily. Moreover, the buffer unit enables easy reordering or reshuffling of candidate samples.

In embodiments of the invention, the HW-RNG can be configured to discard output samples that are generated during a burn-in period that lasts for a user-specified or default number or cycles or corresponds to a user-specified or default number of output samples. This helps to dissipate the effect of initial conditions during which the simulated Markov chain process approaches the stationary distribution. The initial conditions, e.g. the initial observations required for the proposal distribution, may be chosen arbitrarily by the scheduling unit or may agree with user-defined (e.g., based on educated guess or previous simulation results) or default starting values, when the scheduling unit determines the initially required proposal distributions for the first iteration of the Markov chain during an initialization or setup phase. Information relating to the burn-in period and/or the starting values of the observations may be obtained by the scheduling unit upfront, via user input or access to a configuration file on a data store.

The scheduling unit of the HW-RNG may also be configured to receive information about the target distribution and determine the number 'd' of random variables/components of the random vector corresponding to the target distribution. This determines the dimension of the target distribution and the related sampling problem. Furthermore, the scheduling unit may be configured to compare the sum x+y to the number of random variables, d, and switch between a systematic scan mode and a random scan mode depending on the result of this comparison. If d > x+y, the scheduling unit switches to the random scan mode, whereas d < x+y triggers the systematic scan mode. Alternatively, the scheduling unit may compare the number of p-bit device sets, N, to the number of random variables, d, and switch to the systematic scan mode if d < N and else select the random scan mode. In the random scan mode, the scheduling unit selects one of the d random vector components x(i), i = 1, ..., d, at random and updates the proposal distribution $p_i$ that is a function of the randomly selected component, e.g. $p_i$ = p(x(i)[t+1]|X[t]) with X[t] = (x1[t], x2[t], ..., xd[t]). Non-selected components can be carried over as x(k)[t+1] = x(k)[t], k not equal to i. The scheduling unit then instructs the programming unit to reprogram an appropriate set of p-bit devices according to the updated proposal distribution.

In the systematic scan mode, the scheduling unit selects the random vector components x(i), i = 1, ..., d, systematically according to a predetermined sequential ordering, e.g. J = {perm(1), ..., perm(d)} with 'perm' being a permutation of the d indices {1, ..., d}. The scheduling unit then updates the corresponding proposal distribution $p_{J(k)}$, using the updates of the preceding components immediately for the remaining components, e.g. $p_{J(k)}$ = p(x(J(k))[t+1]|x(J(1)) [t+1], ..., x(J(k-1))[t+1], x(J(k))[t], ..., x(J(d))[t]) or, for fully conditional distributions $p_{J(k)}$ = p(x(J(k))[t+1]|x(J(1))[t+1], ..., x(J(k-1))[t+1], x(J(k+1))[t], ..., x(J(d))[t]). Furthermore, if the number of p-bit device sets, N, exceeds the number of dimensions, d, i.e. if N > d, then the scheduling unit can be configured to run multiple instances of the Markov chain process in the systematic scan mode, e.g. simulate ceil(N/d) Markov chains as different threats of the sampling process in the systematic scan mode. This can be achieved by allocating more than just a single p-bit device set to each proposal distribution associated with the simulated Markov chain. Assigning and programming a proposal distribution of the Markov chain to as many as m=ceil(N/d) p-bit devices means that m candidate samples can be drawn from the m sets of p-bit devices during each iteration of the Markov chain. The m candidate samples from the m chain instantiations may be combined or mixed to accelerate convergence of the Markov chain process. Candidate samples obtained with respect to different chains may be mixed, e.g. exchange or cross-inject accepted samples from one chain for use as an observation during a subsequent iteration of another chain.

It is advantageous to enable a number L of p-bit device sets in systematic scan mode operation of the HW-RNG, such that L mod d = 1 and L > d. Under this condition, the random variables (RVs) of the target distribution can be scanned continuously in the same order of appearance; the next proposal distribution to be updated is predetermined by the sequence of random variables, e.g. RV y following, RV x, RV z following RV y, etc. This simplifies the random variable/component selection process of the scheduling unit, which can be reduced to a round-robin selection scheme for the sequence of random variables and associated proposal distributions of the Markov chain. Moreover, each set of p-bit devices is reprogrammed according to the proposal distribution that corresponds to the following random variable in the fixed ordering. For instance, a set of p-bit devices programmed according to the univariate proposal distribution that is a function of RV 'x' will be reprogrammed according to the univariate proposal distribution that is a function of RV 'y' if y succeeds x in the given ordering of random variables. An initial programming of the proposal distributions may also follow the ordering of the random variables, e.g. a first set of p-bit devices initially programmed according the univariate proposal distribution that is a function of RV 'x1=x', a second set of p-bit devices initially programmed according the univariate proposal distribution that is a function of RV 'x2=y', ..., a d-th set of p-bit devices initially programmed according the univariate proposal distribution that is a function of RV 'xd', a d+1st set of p-bit devices initially programmed according the univariate proposal distribution that is a function of RV 'x1=x', a d+2nd set of p-bit devices initially programmed according the univariate proposal distribution that is a function of RV 'x2=y', etc. In embodiments of the invention, the scheduling unit may be configured to enable a subset of L sets of p-bit devices out of the total number of N sets of p-bit devices and restrict the select signals and configuration signals to this subset of L p-bit device sets. That is, disabled ones of the N sets of p-bit devices are not addressed for programming or coupling to the sampling circuit during the pipeline operation of the HW-RNG.

In embodiments of the invention, the scheduling unit may be configured to instruct the programming unit to reprogram the set of p-bit devices that preceded the currently selected p-bit device set (for coupling to the sampling circuit) by y selection cycles with the currently updated proposal distribution. That is, the selection circuitry having selected p-bit device set $s(k) := S((k \bmod N) +1)$ in the current cycle 'k', the scheduling unit includes addressing information into the configuration data for reprogramming that addresses the p-bit device set $s(k-y) := S((k-y \bmod N) +1)$. This means that the p-bit device set undergoing selection by the selection circuitry during the next cycle (cycle after the cycle during which the scheduling unit determines the proposal distribution update) is lagging by y cycles with respect to the selection of the p-bit device set undergoing programming in the next cycle. Here, the set S refers to the set of indices $\{1, 2, ..., N\}$ for identification of the sets of p-bit devices, or any permutation thereof. Alternatively, the scheduling unit may be configured to instruct the programming unit to reprogram the set of p-bit devices that succeeds the currently selected p-bit device set (for coupling to the sampling circuit) by x selection cycles with the currently updated proposal distribution. That is, the selection circuitry having selected p-bit device set $s(k) := S((k \bmod N) +1)$ in the current cycle 'k', the scheduling unit includes addressing information into the configuration data for reprogramming that addresses the p-bit device set $s(k+x) := S((k+x \bmod N) +1)$. This means that the p-bit device set undergoing selection by the selection circuitry during the next cycle (cycle after the cycle during which the scheduling unit determines the proposal distribution update) is anticipating the selection of the p-bit device set undergoing programming in the next cycle by x cycles. If $N = x+y$, the two alternatives designate the same set of p-bit devices.

In embodiments of the invention, the same sequential ordering 'S' of sets of p-bit devices can be used to determine the sequential programming order of the sets of p-bit devices and the sequential selection order of the sets of p-bit devices for coupling to the sampling circuit. This means that the delay between the configuration signal and the select signal may be determined once, e.g. during initialization of the HW-RNG, and then be kept constant.

In embodiments of the invention, the scheduling unit of the HW-RNG may be configured to recompute or update proposal distributions associated with the simulated Markov chain based on a single-component strategy. That is, the proposal distributions are univariate distributions for individual components of the random vector associated with the target distribution and candidate samples are obtained by the sampling circuit on a per-component basis.

As explained, the HW-RNG in accordance with embodiments of the invention do not stall the output sample generation process in response to adaptations of the proposal distributions associated with the Markov chain simulated on the HW-RNG. The pipelined arrangement of the components of the HW-RNG, especially the overlapping of reprogramming phases with the other phases of the RNG pipeline, and the cyclic selection of different sets of p-bit devices programmed according to the adaptive proposal distributions ensures continuous operation of the HW-RNG without diminishing throughput.

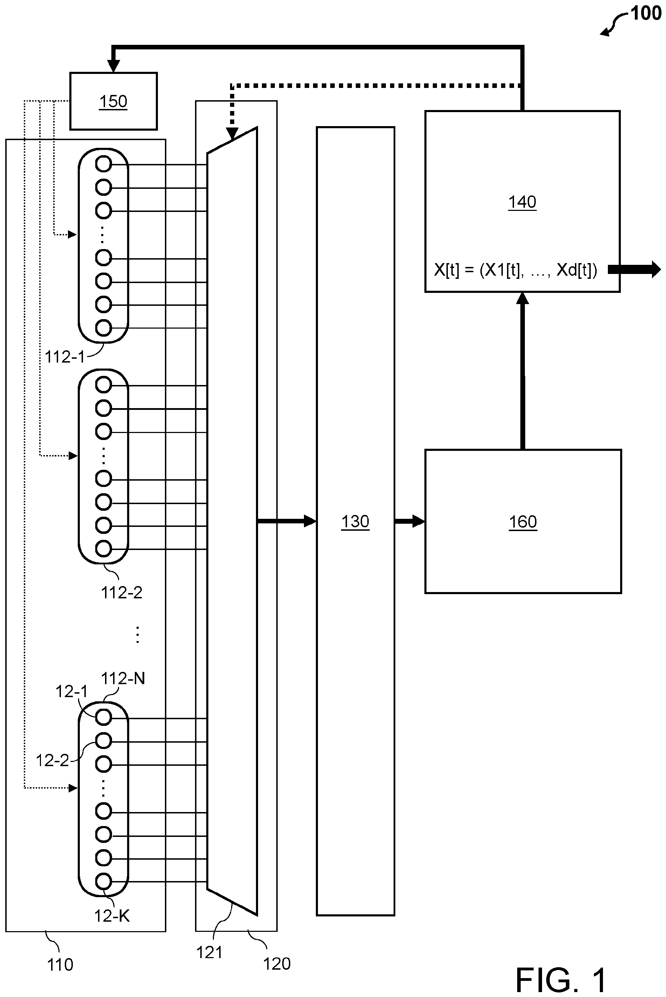

FIG. 1 is a block diagram of a hardware random number generator (HW-RNG) according to an embodiment of the invention. The HW-RNG 100 has a pipeline architecture and comprises a plurality of sets of programmable p-bit devices 112-1 through 112-N associated with a seeding stage 110 for candidate samples, selection circuitry 121 associated with a selection and p-bit routing stage 120, a sampling circuit 130 associated with a sampling stage for candidate samples, a scheduling unit 140 associated with a scheduling stage and a programming unit 150 associated with a programming stage. Optionally, a buffer unit 160 for holding candidate samples is connected between the sampling circuit 130 and the scheduling unit 140. The seeding stage, the selection and routing stage, the candidate sampling stage, the scheduling stage and the programming stage are connected to each other to form a closed-loop hardware pipeline for the sample generation process. The HW-RNG is preferably implemented as a digital electronic circuit or digital electronic device. Hardware registers (not shown) may be provided between adjacent stages of the HW-RNG pipeline. Moreover, the HW-RNG 100 operates in cycles and uses a clock signal to synchronize the stages of the HW-RNG pipeline. The cycle-defining clock signal may be generated by an external clock signal generator and supplied to the HW-RNG 100. Alternatively, the clock signal is generated by an internal clock signal generator of the HW-RNG 100 (not shown). Each of the aforementioned HW-RNG stages is characterized by an associated processing latency or delay, which can be expressed in in terms of operation cycles. The total latency of the HW-RNG, e.g. the roundtrip delay, corresponds to a number of cycles, x+y, of which x designates the number of cycles required for programming one of the N sets of p-bits 112-1 to 112-N. The scheduling unit 140 is configured to provide configuration data to the programming unit, which includes information about an updated proposal distribution of the simulated Markov chain process that needs to be programmed as well as address/identification information that addresses/identifies the one set of p-bit devices into which the updated proposal distribution is to be programmed. Preferably, there are at least N ≥ x distinct sets of programmable p-bit devices arranged in the candidate sample seeding stage 110 and, more preferably, there are at least N ≥ x+y such sets of p-bit devices. Good throughput at high clock rates can be sustained thanks to the pipeline architecture of HW-RNG 100 and the delay between a programming signal that causes the reprogramming of the individual sets of p-bit devices according to an adapted proposal distribution and a select signal that operatively couples one of the sets of p-bit devices to the sampling circuit 130. The HW-RNG pipeline and the output sample generation process are not stalled when one of the p-bit device sets undergoes reprogramming. Output samples X[t] = (X1[t], ..., Xd[t]) of a d-dimensional random vector associated with the target distribution are generated iteratively for each time step of the simulated Markov chain by the scheduling unit 140. An output sample can be generated at each clock cycle of the HW-RNG.

Each set of p-bit devices contains a plurality of parallelly working p-bit devices, e.g. K such p-bit devices 12-1 through 12-K. In embodiments of the invention, the number 'K' of p-bit devices per set of p-bit devices may be of the order of hundreds to thousands of p-bit devices. Each of the p-bit device of the seeding stage 110 may be provided as a reconfigurable stochastic magnetic tunnel junction (MTJ) device, e.g. using the thermally activated fluctuations of the magnetic free layer of magnetic MTJ devices as described in P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022. Other tunable sources of rapidly fluctuating random or pseudorandom bits may be used as the programmable targets addressed by the programming unit 150. For instance, linear-feedback shift registers (LFSR) as pseudorandom number generators may be used as sources of random bit sequences with controllable mean value. In alternative embodiments, multiple programming units may be provided, e.g. a separate programming unit for each set of p-bit devices. The scheduling unit 140 may then address the set of p-bit devices destined for reprogramming indirectly via the corresponding programming unit.

Each p-bit device of the sets of p-bit devices is configured to generate a stream of p-bits of which individual p-bits can be retained as random input bits for the sampling circuit. The stream of p-bits generated by each of the p-bit devices of the seeding stage 110 has an associated probability of producing logical '1' bits, P(1) = p, and probability of producing logical '0' bits, P(0) = 1-P(1) = 1-p, which is controllable. As individual random bits are realized in an independent way by the respective p-bit devices, the probability 'p' also designates the statistical mean value (also called expectation value) for a sequence of p-bits originating from the same p-bit device. This statistical mean value with respect to each p-bit device is individually programmable. As explained before, each one of the sets of p-bit devices is programmed according to a proposal distribution of the underlying Markov chain process that is executed on the HW-RNG. This means that probability values p11, p12, ..., p1K representative of a first one of the proposal (probability) distribution, e.g. pdf(1), are encoded in the adjustable means of the p-bit devices 12-1 to 12-K of the corresponding set of p-bit devices, e.g. p-bit device set 112-1, probability values p21, p22, ..., p2K representing a second one of the proposal distributions, e.g. pdf(2), are encoded in the adjustable means of the p-bit devices 12-1 to 12-K of the corresponding other set of p-bit devices, e.g. p-bit device set 112-2, etc. In total, a set of up to N generally distinct proposal distributions pdf(1), pdf(2), ..., pdf(N) can be programmed this way.

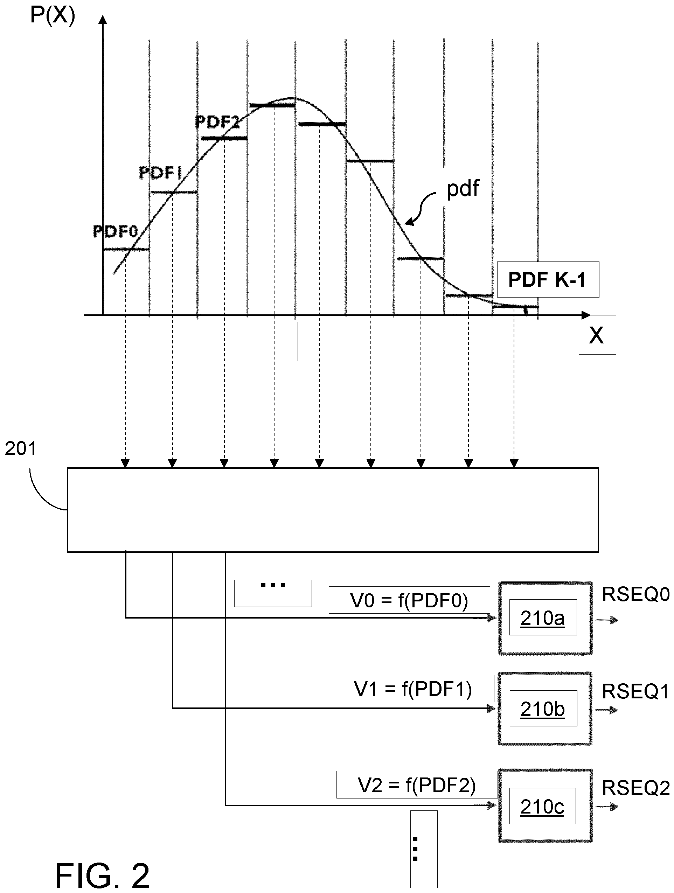

The programming unit 150 is configured to set the expectation values of the distinct p-bit devices belonging to each set 112-1 to 112-N in accordance with the proposal distributions determined by the scheduling unit 140. In alternative embodiments, several programming units may be provided in the sample generation stage to enable parallel or time-overlapped programming of multiple sets of p-bit devices, e.g. a separate programming unit for each set of p-bit devices in the sample generation stage. An initial set of proposal distributions to be programmed by the programming unit 150, and all subsequent updates or replacements of the proposal distributions, may be supplied by the scheduling unit 140. Programmable driving circuits for tunable p-bit arrays, which can be used as programming units in embodiments of the present invention, are described in patent application EP23216348, and more particularly the embodiments referring to FIG. 2 to FIG. 5 therein, which are hereby incorporated by reference.

The selection circuitry 121 is configured to operatively couple the output of one the sets of p-bit devices to the input of the sampling circuit 130 and route the p-bits generated by the coupled set of p-bit devices to the sampling circuit for further treatment. This means that the selection circuitry is adapted to perform the routing and transport of p-bits between selected sets pf p-bit devices and the sampling circuit. The selection of the set of p-bit devices that is coupled to the sampling circuit is determined by the select signal that the selection circuitry 121 received from the scheduling unit 140. In embodiments, the selection circuitry may be implemented by appropriate multiplexing or routing circuitry.

The sampling circuit 130 is configured to generate a candidate sample from the proposal distribution that is programmed into the coupled set of p-bit devices. The sampling circuit receives the K independent p-bit realizations of the connected set of p-bit devices as random bit inputs and is configured to randomly select one of these random bit inputs. Since each random bit input is associated with a value of the random variable that is described by the respective proposal distribution, the so selected random bit determines a random draw from that proposal distribution, i.e. generates a candidate sample from the proposal distribution. The sampling circuit is configured to realize a candidate sample from the proposal distribution associated with one of the sequentially connected sets of p-bit devices with certainty during each cycle of the HW-RNG 100. As explained below, the sampling circuit may comprise a binary selection tree that receives the K independent p-bit realizations of the connected set of p-bit devices as random bit inputs to its leaf nodes and is configured to randomly select one of the candidate random bit inputs at its root node. The origin or seed of the selected random bits are tracked by the binary selection tree, thus allowing to identify the p-bit device in the connected set of p-bit devices that seeded the selected random bit and hence the observed value of the random variable from which the sampling circuit draws the candidate sample. In embodiments of the invention, the sampling circuit may itself have a pipelined architecture in which each depth stage of the binary selection tree constitutes a separate stage of the sampling circuit pipeline. Hence, multiple cycles of the HW-RNG are typically necessary to obtain a candidate sample from the sampling circuit after each new application of random bit inputs.

The scheduling unit 140 determines and supplies the select signal to the selection circuitry 121, so that individual sets of p-bit devices are coupled in sequential order to the sampling circuit 130. For instance, the scheduling unit 140 may generate the select signal according to a round-robin selection rule. Moreover, the scheduling unit verifies that the sets of p-bit devices undergoing reprogramming are not selected as input set to the sampling circuit. This can be achieved by setting an appropriate delay between the configuration signal that is supplied to the programming unit during each cycle and the select signal that is supplied to the selection circuitry during each cycle. This delay can be x cycles or more to guarantee that the set of p-bit devices has finished programming at the time it is selected as the input set to the sampling circuit. In embodiments of the invention, the same sequential ordering 'S' of sets of p-bit devices can be used to determine the sequential programming order of the sets of p-bit devices and the sequential selection order of the sets of p-bit devices for coupling to the sampling circuit. This means that the delay between the configuration signal and the select signal may be determined once, e.g. during initialization of the HW-RNG, and then be kept constant.

The scheduling unit 140 is also configured to accept candidate samples provided by the sampling circuit 130 with an acceptance probability. For some sampling methods executed by the HW-RNG 100, e.g. Gibbs sampling, the acceptance probability is always one and candidate samples are always accepted with certainty. In other sampling methods executed by the HW-RNG 100, e.g. Metropolis-Hastings sampling, the acceptance probability is determined by the scheduling unit as a function of the candidate sample y, the current sample x, e.g. as $p\_acc := \min\{1, (p(x|y)/p(y|x))*(T(y)/T(x))\}$. Here, the function 'T' designates the pdf of the target distribution. It is noted that ratio $T(y)/T(x)$ can be often evaluated numerically even if the exact expressions for $T(x)$ and $T(y)$ are not available. Moreover, for symmetric proposal distributions $p(x|y) = p(y|x)$ such as the often-used Gaussian distributions, the ratio of the conditional transition probabilities is equal to one. The scheduling unit may include a pseudorandom number generator or a p-bit based sampling circuit that realizes the random trial for the acceptance of the candidate sample. Alternatively, a portion of the sets of p-bit devise may be reserved and a dedicated sampling circuit, like sampling circuit 130, may be provided for the acceptance process. This is not required for Gibbs sampling applications running on the HW-RNG 100. The scheduling unit 140 replaces rejected candidate sample y by the current sample x. Otherwise, the accepted candidate sample y constitutes the new sample that is drawn from the target distribution.

For each accepted candidate sample y, the scheduling unit 140 then recomputes or adapts one of the proposal distributions $p(x_i|y, ...)$ of the Markov chain that is conditionally dependent on the accepted candidate sample y. The component 'i' of the random vector $X = (x_1, ..., x_d)$ is determined either randomly if the scheduling unit 140 is operated in the random scan mode or follows the sequential ordering $\{1, 2, ..., d\}$ or any permutation thereof if the scheduling unit is operated in the sequential scan mode. As explained before, the mode of operation may be determined by the scheduling unit as the result of comparing the number of p-bit device sets, N, to the dimensionality d of the target distribution. In embodiments of the invention, the scheduling unit 140 may be configured to perform single-component Gibbs sampling, single-component Metropolis-Hastings sampling, or others. Information about the adapted proposal distribution $p(x_i|y, ...)$ of the Markov chain is then transmitted as configuration data by a configuration signal. The scheduling unit generates this configuration signal and supplies it to the programming unit 150 to provide feedback to the seeding stage 110. The configuration signal also includes address data for identifying the set of p-bit devices that is to be reprogrammed according to the updated proposal distribution. This address data may comprise or consist of a set index 's' that uniquely identifies one of the sets of p-bit devices. The scheduling unit may sequentially address the sets of p-bit devices to be programmed during the next cycle (following the current cycle during which the proposal distribution is recomputed), e.g. in a round-robin fashion, by incrementing the set index modulo N at each cycle. In embodiments of the invention, the scheduling unit may be implemented by dedicated hardware, e.g. control and processing unit or, in a system-on-chip solution of the HW-RNG, by the CPU or other co-processing unit.

An output sample buffer may be optionally provided to temporarily hold output samples or collect components of sequentially generated vector output samples. The output and candidate sample buffers may be beneficial for meeting timing constraints and improving the pipelined operation of the HW-RNG 100.

FIG. 2 illustrates the programming of a proposal distribution of the Markov chain process through adjustment of the expectation values of the corresponding set of p-bit devices. P-bits generated according to the probability values of the proposal distribution are random bit inputs to the hardware sampling circuits of the sample generation stage. In embodiments of the invention, the proposal distribution from which the primary samples are drawn may be an arbitrary pmf or pdf, and expresses a transition probability of the Markov chain process that is conditional on the observation of the recent past, e.g. the last observed sample. Regarding the proposal distributions, the term "arbitrary" usually means "arbitrary shape", since the proposal distributions are in general univariate distributions. A smooth probability density function 'pfd' is shown in FIG. 2, whose outcomes are continuously distributed along the horizontal axis and for which the respective probability of occurrence is reported as function value on the vertical axis. The smooth probability density function is approximated by a discrete random variable 'X' that takes K different values (outcomes) along the horizontal axis. A probability mass function, P(X), is associated with the discrete random variable X and assigns a probability value to each one of the K different values of X. The discretization of the smooth probability density function 'pdf' may include the step of integrating the probability density over the respective discretization intervals/bins along the horizontal axis and assign to each bin the corresponding result of this integration, i.e., assign to each outcome x of X a probability P(x) such that P(x) equals the integral value of the continuous function 'pdf(x)' when calculated over the discretization interval I[x] that contains 'x'. In the figure, these probabilities P(x) are indicated as short straight-line segments and are labelled PDF0, PDF1, ..., PDF K-1. In embodiments of the invention, the K different outcomes of the discrete random variable X may be designated by the midpoints of the respective discretization intervals or simply labelled by an index as a reference to the respective discretization interval/bin. The most practical but non-limiting choice of index labelling of the bins is to refer to them by their order of appearance along the horizontal axis, e.g. as x being an element of the finite set {bin(0), bin(1), ..., bin(K-1)} or as x being an element of the index set i = {0, 1, ..., K-1}, where the index 'i' designates the corresponding bin: i->bin(i). The elements of the index set may be represented as binary numbers and/or the index set may be recentered about its mean, e.g., $i\_cen = \{-K/2, ..., -1, 1, ..., K/2\}$ if K is pair, or else $i\_cen = \{-(K-1)/2, ..., -1, 0, 1, ..., (K-1)/2\}$. Programming unit 201 is operatively connectible to a set of programmable p-bit devices 210a, 210b, 210c, and so forth. The programming unit 201 is configured to accept a set of probability values (e.g., PDF0, PDF1, ..., PDF K-1) related to the proposal distribution to be encoded/programmed as inputs and generate a corresponding set of programming signals (e.g., V0 = f(PDF0), V1 = f(PDF1), V2 = f(PDF2), etc.) for setting the statistical mean values of the respective p-bit devices 210a, 210b, 210c, etc. The programming signals may be control signals that are applied - sequentially or in parallel - to auxiliary driver circuits for the different p-bit devices, or the programming signals may be directly applied as control/driver signals to the different p-bit devices. The programming unit may invoke or perform a p-bit hardware dependent transformation 'f' that maps the probability values to appropriate programming signals, e.g. by accessing a calibrated look-up table. When programming of the set of p-bit devices is completed successfully, the random bit sequences or p-bit streams produced at the outputs of the p-bit devices 210a, 210b, 210c, etc. all follow a Bernoulli distribution, the expected value of which coincides with one of the probability values representative of the proposal distribution. In other words, there is a unique association between each of the discretization intervals/bins, bin(0), bin(1), etc., and one of the random sequences, RSEQ0, RSEQ1, etc., such that the probability of observing the bin is equal to - up to a quantization error - the expected value of the corresponding random sequence. That is, there is an association bin(i) -> RSEQi, i = 0, 1, ..., K-1, such that P(x = bin(i)) = E[RSEQi], where E[*] designates the mean/expected value operator. It also follows that observations of each probabilistic bit sequence, RESQ1, RSEQ2, etc., e.g. as sampled at a given time, are instances of independent Bernoulli trials, which reflect the chances of or rejecting or accepting a sample 'u' from a uniform random variable, U[i], with respect to the corresponding bin, bin(i), depending on whether the sample 'u' is exceeding the probability value for that bin or not. Indeed, the probability of acceptance is $Prob(u \leq PDFi) = PDFi/\max(PDF) \propto PDFi$ for the i-th bin.

In embodiments of the invention, the proposal distribution is preferably scaled, rather than being area normalized, such that its mode 'pmax' (i.e. the maximum probability value) equals one, e.g. setting pmax = 1. In that sense, the set of p-bit devices 210a, 210b, 210c, etc. emulates a vast parallelization of independent trials, distributed over the whole range of outcomes of the underlying random variable. The sampling circuit then provides an efficient means of selecting one successive trial out of the vast number of independent trials. This ensures that, apart from a predetermined delay, a candidate sample of the proposal distribution is obtained at each cycle of the HW-RNG.

Sampling circuits suitable for use in the candidate sampling stage of the HW-RNG in accordance with embodiments of the invention are described in detail in patent application EP23216705, especially in the embodiments referring to FIG.2 to FIG. 6 therein, which are hereby incorporated by reference.

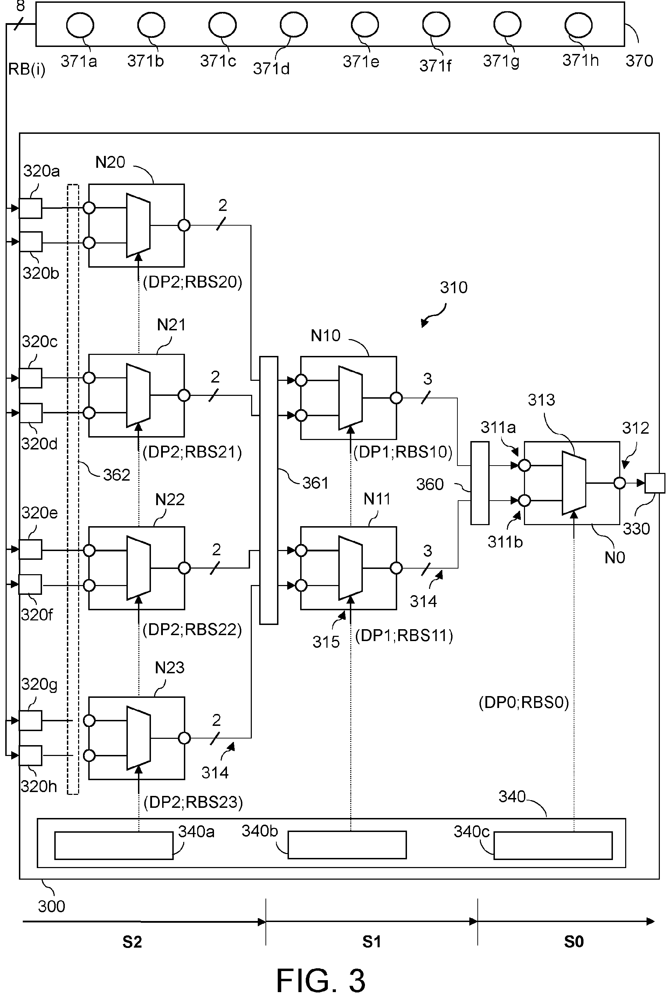

FIG. 3 is a block diagram of an exemplary sampling circuit 300 that can be used in the candidate sample generation stage of HW-RNGs in accordance with embodiments of the invention. The sampling circuit 300 comprises input terminals 320a-h, an output terminal 330, a detection logic circuit 340, and a binary selection tree structure 310 interposed between the input terminals 320a-h and the output terminal 330. The binary selection tree structure 310 comprises a plurality of (tree) nodes which are arranged at different depth levels of the selection tree 310. Each tree node has a pair of input terminals 311a-b, an output terminal 312 and a selector circuit 313 connected between the input terminals and the output terminal. Each tree node further includes a control terminal 315 for receiving select signals (DP; RBS) that control the operation of the selector circuit 313. Among the nodes of the selection tree, the root node is the only node that has no parent node, whereas leaf nodes are tree nodes that have no child nodes. The root node acts as an output node of the binary selection tree and the leaf nodes act as input nodes. The depth level to which a node of the selection tree belongs is also referred to depth stage and is determined by the number of edges that connect the node to the root node of the selection tree. The root node N0 therefore has a depth $d = 0$ and belongs to the depth stage S0, the internal nodes N10 and N11 each have a depth $d = 1$ and belong to the depth stage S1, and the leaf nodes N20, N21, N22 and N23 each have a depth $d = 2$ and belong to the depth stage S2. In the binary selection tree structure 310, each child node is connected to its parent node by an edge connection 314. More precisely, the output terminal 322 of each child node is connected to the respective input terminal 321a or 321b of the parent node, depending on the position of the child node relative to the parent node. Here, the first child node of the parent node is defined to have a position or address '0' and the second child node is defined to have a position or address '1'. A single position index bit is thus sufficient to indicate the child node's position relative to the parent node and also identify the child node for a given parent node. Ancestor nodes of a particular tree node refer to nodes of smaller depths that can be reached from the tree node via more than just a single edge. Child nodes and parent nodes therefore belong to subsequent depth stages of the selection tree. Although the binary selection tree structure of the present embodiment has exactly eight leaf nodes, other embodiments may have a different or much larger number of leaf nodes, e.g. more than one hundred, e.g. more than one thousand leaf nodes. The number of leaf nodes in a perfect binary selection tree structure is always a power of two.

During the operation of the sampling circuit 300, child nodes dispatch output signals to their parent nodes, which may be relayed by synchronized or clocked hardware registers 360, 361 between the different depth stages of the binary selection tree structure. The relayed output signals constitute the input signals of the parent nodes of the subsequent depth stage. Leaf nodes receive pairs of random bits from the connected set of p-bit devices, e.g. p-bit array 370, as input signals. The relayed output signals with respect to each depth stage of the binary selection tree structure comprises an output bit as a first signal component and an indexing bit sequence as a second signal component. The output bit represents one of the random input bits RB(i) that has been repeatedly selected/accepted in all the preceding depth stages, whereas the indexing bit sequence is a record of the relative positions of the child nodes of all the preceding depth stages through which the repeatedly selected/accepted random input bits RB(i) has passed so far. The indexing bit sequence is thus extended by one position indexing bit (e.g. address bit of the selected child node) at every depth stage of the binary selection tree but reduces to a single position indexing bit for the depth stage containing the leaf nodes. Hence, a bit-width of the relayed output signals and the related edge connections between subsequent depth stages increases by one bit at every depth stage of the binary selection tree. For a perfect binary selection tree of height 'h', in which there are $2^h$ leaf nodes, $2^{(h+1)}-1$ tree nodes in total and $h+1$ depth stages, the bit-widths 'BW' of the relayed output signals and the transmission wires of the related edge connections are BW = 2, 3, ..., 2+h for depth stages S = h, h-1, ..., 0 respectively. In some embodiments, only the final indexing bit sequence is provided at the output terminal 312 of the root node, because the output bit always being equal to a logical '1' state does not constitute useful information. In such embodiments, the bit-widths of the output signal and the related output wire of the root node of depth stage S = 0 = S0 is BW = 2+h-1 instead of BW = 2+h.

A clock signal for clocked hardware registers may be generated by a global timing control unit of the sampling circuit, which ensures that each depth stage has finished calculating the output signals and is ready to receive new input signals (e.g. preventing depth stages from stalling). Synchronization between the different depth stages may also be achieved by hardware registers that comprise suitable data status signaling logic between the subsequent depth stages, e.g. data available and data received signals. This has the advantage that the different depth stages of the binary selection tree structure can be operated as stages of a multi-stage processing pipeline. This increases the sampling circuit throughput and avoids long settling delays or race conditions that may occur in a purely combinatorial selection tree circuit. Random input bits RB(i) are optionally also buffered by a hardware register 362 at the input terminals 320a-h of the sampling circuit 300, prior to applying them pairwise to the input terminals pairs 311a-b of the different leaf nodes. This may compensate for possible differences in the signal delays of the random bit sequences RB(i), thereby ensuring that a complete input bit pair is available for each leaf node before processing by the selector circuit 313 begins. In this case, the input terminals 320a-h of the sampling circuit 300 are coupled through the hardware register 362 to the input terminals pairs 311a-b of the different leaf nodes. In the absence of the hardware register 362, the input terminals 320a-h of the sampling circuit 300 are directly coupled to or identical with the input terminals pairs 311a-b of the different leaf nodes. In alternative embodiments of the sampling circuit, output signals from child nodes may be temporarily retained in a buffer element or flip-flop that is coupled to the child node output terminal, or are placed onto a buffered delay line.

The sampling circuit 300 further comprises a detection logic circuit 340, which may be assembled from a set of independent detection unit 340a-c, wherein each depth stage S2-S0 of the binary selection tree structure 310 is associated with one of the detection units 340a-c. The detection logic circuit 340 is coupled to the input terminals of all tree nodes belonging to the same depth stage of the binary selection tree and configured to detect a tie situation among the input bit pairs that are applied the input terminals of the tree nodes belonging to the same depth stage. A tie condition or tie situation with respect to a depth stage of the binary selection tree structure is defined as the existence of at least one input bit pair among the input bit pairs applied the input terminals of the tree nodes belonging to that depth stage, of which the bit values both represent a logical '1' state ('TRUE' state). In other words, there is a tie condition for depth stage 'm' if at least one of the input bit pairs ($RB_{m,2j}$; $RB_{m,2j+1}$) for nodes j = 0, ..., m-1 of depth stage 'm' is equal to (1; 1). For instance, detection unit 340a is coupled to the input terminals of all leaf nodes of depth stage S2 of the binary selection tree 310 to detect a tie condition among the input bit pairs that are applied to the leaf nodes of depth stage S2, detection unit 340b is coupled to the input terminals of all internal nodes of depth stage S1 of the binary selection tree 310 to detect a tie condition among the input bit pairs that are applied to the internal nodes of depth stage S1, and detection unit 340c is coupled to the input terminals of the root node of depth stage S0 of the binary selection tree 310 to detect a tie condition among the input bit pair that is applied to the root nodes of depth stage S0.

For each tree node, the selector circuit 313 is configured to determine which one of the two input signals is accepted, based on the select signal present at the control terminal 315, identifies the child node of which the input signal is accepted, propagate the first signal component received from the identified child node from the corresponding input terminal to the output terminal of the node, propagate the second signal component received from the identified child node from the corresponding input terminal to the output terminal, and supply the position index bit for the identified child node at the output terminal. For leaf nodes only, the input terminal of the sampling circuit that is connected to the input terminal of the leaf node plays the role of a child node and is considered to be equal to a child node for the purpose of calculating the outcomes of the selector circuit. The propagated first signal component at the output terminal of the node constitutes the first signal component of the output signal of the node. In some embodiments of the sampling circuit, the selector circuit is configured to construct an extended indexing bit sequence by inserting the position index bit for the identified child node as the most significant bit (MSB) into the indexing bit sequence being the second signal component received from the identified child node. In other embodiments of the sampling circuit, an index register is associated with each tree node and coupled to the output terminal of the node, and the index register is configured to receive the propagated second signal component and the supplied position index bit for the identified child node from the output terminal of the node and construct the extended indexing bit sequence by inserting the received position index bit as the most significant bit (MSB) into the indexing bit sequence being the propagated and received second signal component. The index register may be part of the hardware register arranged between subsequent depth stages of the binary selection tree structure. For all practical purposes of the invention, the extended indexing bit sequence is considered to be the definite second signal component of the output signal of the tree node.

In embodiments of the sampling circuit 300, the selector circuit 313 may be a combinatorial circuit. As explained further below, the selector circuit may determine which one of the two input signals is accepted, based on the following selection rules/input scenarios:

$$IND = DP*RBS + INP1*NOT(DP),$$

and

$$OUT = INP0*(NOT(DP) + DP*NOT(RBS)) + INP1*(NOT(DP) + DP*RBS),$$

wherein the indicator bit 'DP' of the first select signal designates the existence or absence of a tie condition for the depth stage that contains the selector circuit, the auxiliary random bit of the second select signal is designated as 'RBS', the position index bit supplied at the output terminal of the tree node containing the selector circuit is designated as 'IND', and the pair of input bits are designated as 'INP0' and 'INP1', wherein 'INP0' stems from the child node at relative positions '0' and 'INP1' stems from the child node with relative position '1'. Here, child node has to be replaced by input terminal of the sampling circuit for leaf nodes. Moreover, a signal mean value <RBS> of a sequence of random bits RBS is <RBSW> = 0.5, and "+" and "*" designate the bitwise OR and the bitwise AND operation, respectively.

In embodiments of the sampling circuit, each tree node may receive a pair of input signals and supply an output signal. For non-leaf nodes, each input signal comprises a signal bit - also referred to as sampled random bit or Bernoulli trial outcome bit - as a first signal component and an indexing bit sequence as a second signal component. For the leaf nodes, the indexing bit sequence is an empty sequence. The selector circuit of each tree node is configured to accept one of two input signals as part of the node output signal, and reject the other one of the two input signals, wherein the decision to accept or reject an input signal of the pair of input signals depends on the select signals present at the control terminal of the selector circuit. The accepted input signal progresses to the output terminal of the tree node. Hence, the output signal of tree nodes also comprises a signal bit as first signal component and an indexing bit sequence as second signal component. The selector circuit is further configured to determine the position index bit that identifies the input terminal of the tree node, and for non-leaf nodes also the connected child node, where the accepted input signal is currently applied. The selector circuit is further configured to send the determined position index bit as part of the output signal to the output terminal of the tree node, where the position index bit is concatenated with the second signal component of the accepted input signal to obtain an updated second signal component of the output signal. The output signal of a leaf node therefore has a second signal component that contains a single position index bit and is not empty. Moreover, the updating of the second signal component results in an extended indexing bit sequence the bit-width of which increases with every depth stage of the binary selection tree.

In embodiments of the sampling circuit, the selector circuit of each tree node may be configured to randomly decide the input signal that is to be accepted if the detection logic circuit detects a tie for the depth stage to which the tree node belongs. A tie condition is indicated by a first one of at least two select signals for the selector circuit (e.g. 'DP' hereinabove), whereas a second one of the at least two select signals for the selector circuit (e.g. 'RBS' hereinabove) provides an auxiliary random bit that forms the basis for the random decision as to which input signal is accepted. In the absence of a tie condition, the selector circuit of each tree node may be further be configured to accept the input signal of which the signal bit (i.e. first signal component) represents a logical '1' state, or else accept one of the two input signals by default (e.g. either always first input signal or always second input signal) if the signal bits of both input signals represent logical '0' states. Th latter case corresponds to a don't care situation, because signals transmitted over edge connections between tree nodes that contain zero-value signal bits are ultimately rejected by tree nodes of subsequent depth stages of the binary selection tree.

Individual probabilistic bits RB(i) may be fired on command or sampled at regular time intervals, e.g. at each clock cycle of the sampling circuit 300, and are delivered to the respective input terminals 320a-h of the sampling circuit. For instance, the first random bit RB(0) is applied to the first input terminal 320a, the second random bit RB(1) is applied to the second input terminal 320b, and so forth. In consequence, there is a one-to-one relationship between random bit sequences RB(i) and input terminals 320a-h of the sampling circuit, and also between probabilistic bit generators 371a-h and input terminals 320a-h of the sampling circuit. This one-to-one relationship extends to the input terminals of the leaf nodes, which are connected one by one to the respective input terminals of the sampling circuit. Furthermore, the random input bits are applied pairwise to the input terminals 311a, 311b of the different leaf nodes. For instance, random input bits RB(0) and RB(1) are arranged into a first input bit pair that is applied to the respective input terminals of the first leaf node N20, random input bits RB(2) and RB(3) are arranged into a second input bit pair that is applied to the respective input terminals of the second leaf node N21, and so forth.

In embodiments of the invention, the hardware sampling circuit is compatible with a programmable set of p-bit devices, e.g. an array of programmable probabilistic bit generators or programmable/reconfigurable pseudorandom number generators such as LFSBs. Combined with a set of p-bit devices, the sampling circuit allows efficient generation of random numbers from arbitrary proposal distributions. In some embodiments of the invention, the programmable set of p-bit devices, e.g. p-bit array 370, may comprise an additional set of programmable probabilistic bit generators that are responsible for the generation of the auxiliary random bit signals RBS(i) as the second one of the at least two select signals for the selector circuits. Much like the probabilistic bits RB(i), the auxiliary random bit signals RBS(i) may be fired on command or sampled at regular time intervals, e.g. at each clock cycle of HW-RNG. The probabilistic bits, RB(i), and the auxiliary random bit signals, RBS(i), may be generated at the same moments in time. Alternatively, other sources for random or pseudorandom number generation, different from the p-bit array 370, may be used to obtain a set independent auxiliary random bit signals RBS(i).

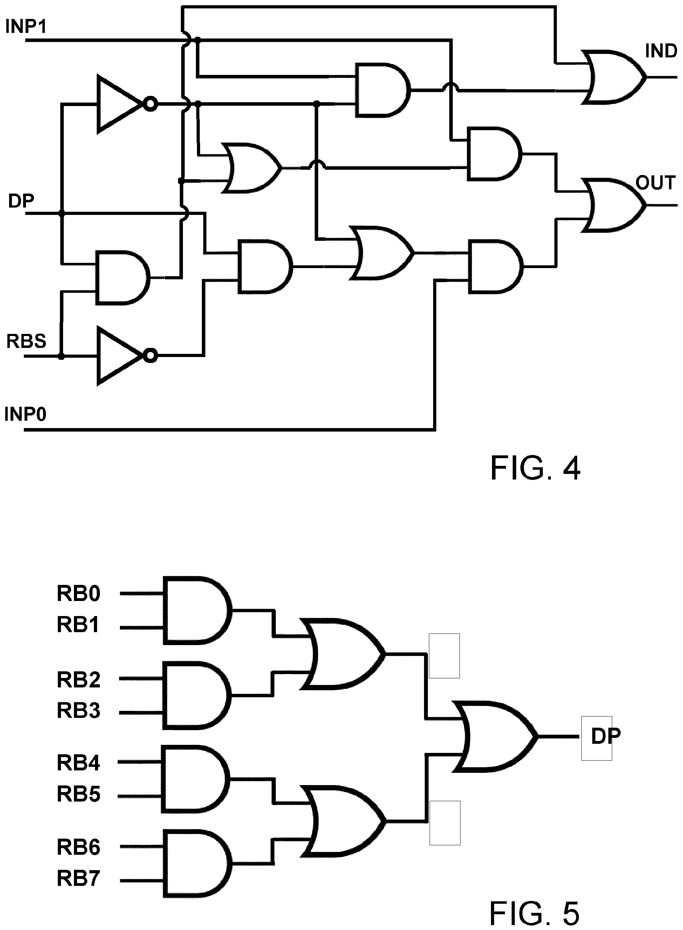

FIG. 4 shows the circuit diagram of an exemplary selector circuit that can be used in sampling circuits of HW-RNGs in accordance with embodiments of the invention. As mentioned previously, each node of the binary selection tree structure may comprise a selector circuit, which is configured to select one of the two input bits INP0, INP1 for admission to the selector circuit output (e.g., allowed to propagate to the output 'OUT'), based on the two select signals 'DP' and 'RBS'. The select signals 'DP' and 'RBS' determine the bit-operations that are performed on the input bits INP0, INP1, to single out one of the two input bits. Likewise, the selector circuit is configured to output the position index bit 'IND' with respect to the selected input bit, e.g. position index bit '0' if the first input but INP0 is admitted to the selector circuit output 'OUT' and position index bit '1' if the second input bit INP1 progresses to the selector circuit output 'OUT'. The position index bit 'IND' supplied by the selector circuit is thereafter inserted into the selected bit indexing sequence from the previous depth stage, e.g. inserted as the most significant bit (MSB), and passed on to the next depth stage. However, the position index insertion may be carried out by a dedicated index register of the tree node or an index register that is part of the hardware registers between the subsequent depth stages of the binary selection tree, rather than by the selector circuit of the tree node. The first select signal 'DP' indicates the presence or absence of a tie condition in the depth stage where the selector circuit is located, while the second select signal 'RBS' designates an auxiliary random bit of a random bit sequence with mean value <RBS> = 0.5, i.e., RBS takes the values '0' and '1' with equal probability. The second select signal 'RBS' is only required if the first select signal 'DP' is 'TRUE/1' and may be ignored/disabled otherwise. As can be inferred from the circuit diagram of FIG. 3, the value of the output bit at the selector circuit output 'OUT' is governed by the following general expression:

$$OUT = INP0*(NOT(DP) + DP*NOT(RBS)) + INP1*(NOT(DP) + DP*RBS),$$

wherein "+" and "*" designate the bitwise OR and the bitwise AND operation, respectively. It is easily verified that in the event of a detected tie condition (i.e., DP = 1), the previous expression simplifies to: OUT = INP0*NOT(RBS) + INP1*RBS.

Depending on the precise value of the auxiliary random bit 'RBS', the value of the output bit is either equal to INP0 or INP1. Therefore, in situations in which a tie has been detected for the depth stage in which the selector circuit is located, each input bit of the input bit pair INP0, INP1 has a 50% chance of progressing to the selector circuit output. Furthermore, the value of the position index bit 'IND' at the selector circuit output is governed by the following general expression:

$$IND = DP*RBS + INP1*NOT(DP).$$

This expression is simplified to IND = RBS in the case of a detected tie condition, confirming that the precise value auxiliary random bit 'RBS' not only randomly selects one of the input bits but also indicates the relative position (address) of the selected input bit as seen by the selector circuit. Indeed, selecting between two successful Bernoulli trials with respect to two different discretization bins should not be biased towards one of the bins but happen with equal probability.

On the other hand, the absence of a tie (i.e. DP = 0) leads to the following simplified expressions for the output Bi and the position index bit:

$$OUT = INP0 + INP1 \text{ and } IND = INP1.$$

This means that the value of the output bit is determined by the bitwise OR operation on the two input bits, whereas the position index bit is given by the value of the second input bit INP 1. This covers the following three cases: (i) INP0 = 1, INP1 = 0, IND = 0, (ii) INP0 = 0, INP1 = 1, IND = 1, (iii) INP0 = INP1 = 0, IND = 0. Indeed, a successful Bernoulli trial with respect to one of the bins equates to an input bit that is one that should prevail over an unsuccessful Bernoulli trial with respect to another bin. If both Bernoulli trials are unsuccessful, it does not matter which one is selected, because it will be ultimately discarded in one of the subsequent stages of the binary selection tree. One may then decide to select the first input bit INP0 by default, by ensuring that IND = 0 in case (iii). Of course, one may also do the opposite by default, i.e. setting IND = NOT(INP0) such IND = 1 always holds by default in case (iii). It is noted that the case of INP0 = INP1 = 1 is not included here, as this corresponds to a tie situation.

The detection logic circuit for detecting ties among a plurality of input bit pairs may comprise a separate detection unit at each depth stage of the binary selection tree structure. The separate detection units associated with the different depth stages are preferably operating in parallel, whereby a processing latency related to each depth stage can be kept small. Alternatively, a single detection logic circuit is provided for the entire binary selection tree structure, e.g. is shared by all depth stages. In such embodiments, the single detection logic circuit is configured to detect ties among the plurality of input bit pairs of each depth stage of the binary selection tree structure in a sequential manner. In yet other embodiments of the invention, the detection logic circuit for detecting ties among a plurality of input bit pairs comprises separate detection units, but several depth stages of the binary selection tree structure share the same detection unit.

The separate detection units of the detection logic circuit may be implemented in various ways. FIG. 5 is a circuit diagram of an exemplary detection unit related to a level-three depth stage of the binary selection tree structure. A level-three depth stage comprises four internal tree nodes and receives eight random bits RB0-RB7 as inputs, wherein the random input bits are supplied pairwise to the corresponding tree node, e.g. a first pair is formed by input bits RB0 and RB1 with respect to the first node of the third depth stage, a second pair is formed by input bits RB2 and RB3 with respect to the second node of the third depth stage, and so forth. The input bits of each pair are fed into a logical AND gate to detect whether the two bits of the pair both have a '1' logical state. The outputs from the AND gates are then subjected to a cascade of logical OR gates, which form a multi-input OR gate. The resulting output 'DP' from the multi-input OR gate is 'TRUE' if any of the four input bit pairs represents a tie condition, i.e. the two bits of the pair both have a '1' logical state. Otherwise, the resulting output 'DP' from the multi-input OR gate is 'FALSE', indicating that no tie condition has been detected at this depth stage.

A plurality of HW-RNGs according to embodiments of the previous aspect can be assembled into a larger system to provide support for pooling of MCMC jobs. Each MCMC job may refer to the instantiation of a Markov chain process. As explained earlier, the same Markov chain can be instantiated many times to enable mixing across chains and accelerate convergence. The mixing consists in the injection or use of samples observed in one chain into a different chain for use during the next iterations. This helps to explore the sample space more efficiently and allows for larger transitions to yet unexplored regions of the sample space. However, MCMC jobs may also relate to Markov chains associated with the sampling from different target distributions.

Hence, another aspect of the invention relates to a system that comprises a plurality of HW-RNGs according to embodiments of the previous aspect. The system preferably includes a high-rank scheduling unit that is configured to schedule a plurality of Markov chains to be simulated, by determining available HW-RNGs, assigning not yet executed ones of the plurality of Markov chains to respective ones of the available HW-RNGs, and instantiate and launch the not yet executed ones of the plurality of Markov chains on the assigned HW-RNGs. Such systems are well-suited for sampling from very high-dimensional target distributions, e.g. d >> N. The HW-RNGs can then all operate in the same mode and updates to the components of the very high-dimensional random vector can be efficiently distributed across the different

EP 4 769 116 A1

HW-RNGs. For sampling from very high-dimensional target distributions, e.g. d >> N, it is usually to be expected that different random vector components are sampled by different HW-RNGs, thus requiring the exchange of observations among the HW-RNGs.

The system may comprise a global sample buffer or a plurality of local sample buffers, associated with the plurality of HW-RNGs, which hold the output samples generated by the plurality of HW-RNGs. Th exchange of observations among the HW-RNGs may then take place through the global buffer or the collection of local buffers.

The high-rank scheduling unit can be configured to read output samples from the global or local sample buffers and exchange, mix or shuffle output samples associated with different ones of the HW-RNGs. This enables mixing of Markov chains across the HW-RNGs. Instead of buffering the output samples, the candidate samples may be buffered. The high-ranked scheduling unit may be configured to gather the output samples needed by the local scheduling unit of the individual HW-RNGs to proceed with the computation of the proposal distributions.

In alternative embodiments, the high-rank scheduling unit assigns independent MCMC jobs to individual ones of the HW-RNGs. The HW-RNGs then execute MCMC jobs in parallel and operate independently from each other. The high-rank scheduling unit may enable and disable each of the HW-RNGs according to the number of pending MCMC jobs.

In some embodiments, the high-rank scheduling unit replaces the scheduling unit of the individual HW-RNGs. A centralized albeit more complex high-rank scheduling unit can improve the shuffling and distribution of MCMC jobs and allows to accommodate very large jobs. The centralized high-rank scheduling is then configured to perform the steps of all the local scheduling units that it replaces, e.g. update of proposal distribution, generation of configuration and select signals, acceptance of candidate samples, etc. In other embodiments, the local scheduling units of the individual HW-RNGs are maintained and the high-rank scheduling unit is used to perform the MCMC job assignments and cross-injections of output or candidate samples.

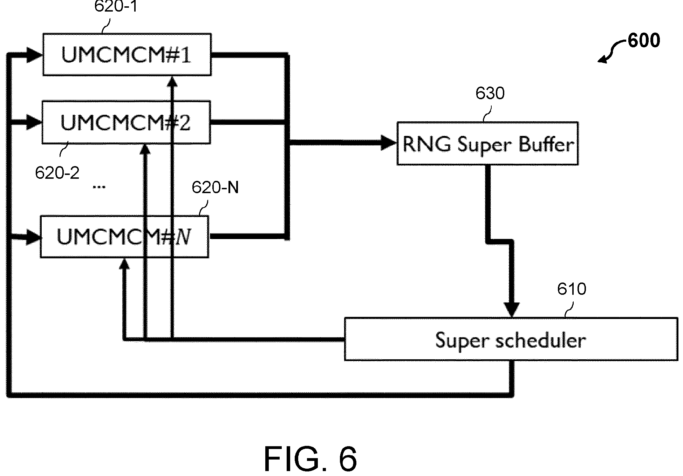

FIG. 6 shows an exemplary hardware system 600 that comprises a plurality of HW-RNGs 620-1 through 620-N, referred to as universal MCMC machines (UMCMCM), a higher-ranked scheduling unit 610, referred to as super scheduler, and a global buffer 630 for output samples, referred to as RNG super buffer. The super scheduler 610 reads output samples in the super buffer 630 and distributed them to the HW-RNGs, e.g. UMCMCM#1 to UMCMCM#N. Moreover, the super scheduler 610 handles the distribution, assignment, initialization and launching of MCMC jobs. In a system-on-chip solution, the super scheduler may be a dedicated processing unit or the CPU.

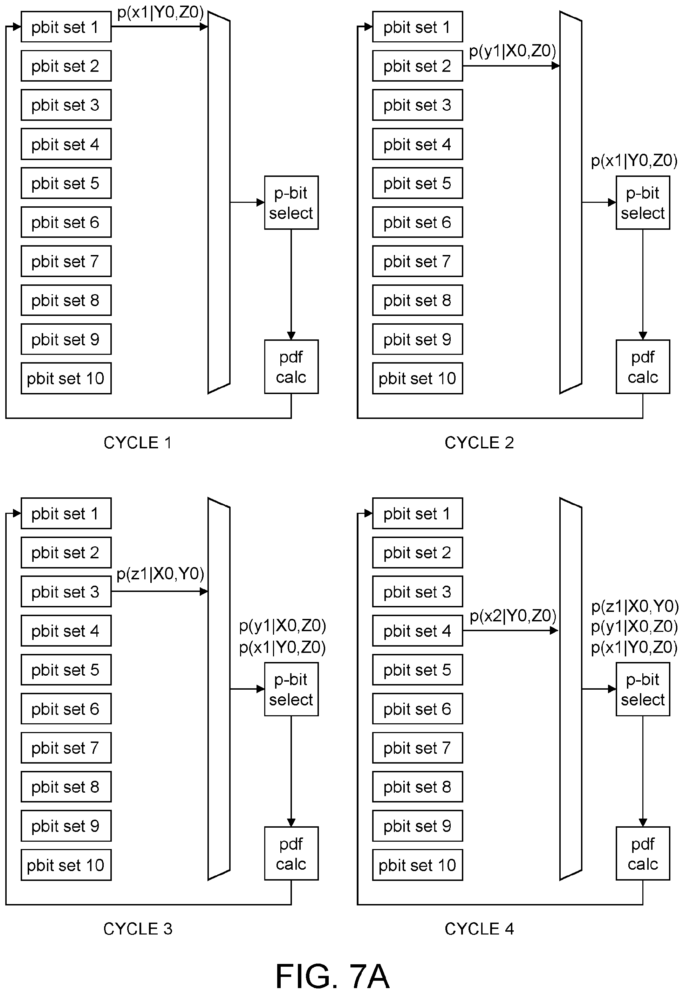

FIGS. 7A-7C illustrate the flow of data in a HW-RNG in accordance with embodiments of the invention, configured for systematic scan Gibbs sampling. Clock cycles 1-11 and 15 are shown. The target distribution of this example has a three-dimensional joint probability distribution p(x,y,z). Proposal distributions associated with the Gibbs sampling process are the fully conditional one-step probability distributions p(x[t+1]|Y[t],Z[t]), p(y[t+1]|X[t+1],Z[t]), and p(z[t+1]|X[t+1],Y[t+1]). Here, X[t], Y[t] and Z[t] are observations of the random variable (vector component) x, y and z at time t, respectively. Similarly, x[t+1], y[t+1] and z[t+1] designate the respective candidate values for the random variable x, y and z during the next iteration. The underlying Markov process is first-order.

In the present example, the programming phase lasts for x = 5 cycles, the multiplexing and routing delay lasts for one cycle, the candidate sampling delay lasts for three cycles and the scheduling delay lasts for one cycle. Hence, y = 5 cycles too, and one has x+y = 10 cycles. The number of sets of p-bit devices is N = 10 = x+y. Sets of p-bit devices are selected sequentially for p-bit routing and candidate sampling by the sampling circuit in a round-robin manner. Likewise, the sets of p-bit devices are selected sequentially for programming in a round-robin manner. As can be seen, the select signal leads the programming/configuration signal by y = 5 cycles. After five initial clock cycles, the RNG pipeline is filled, so that valid configuration signals are available for feedback and reprogramming can start as of the sixth clock cycle. Initial observations of the three random variables are chosen arbitrarily as X0, Y0 and Z0. It is noted that this example uses an iteration time step for the Markov process that corresponds to four delay cycles. Therefore, p(x[t+1]|Y[t],Z[t]) is equivalent to p(x[#cycle+4]|Y[#cycle],Z[#cycle]), and so forth. The next clock cycle 16 resembles clock cycle 1, except for the changes in the proposal distributions, the observations, and the filling of the pipeline. As can be understood from the figures, multiple Markov chains are instantiated and simulated in parallel on the HW-RNG of the present example. More specifically, there are m = ceil(N/d) = ceil(10:3) = 4 distinct chains running simultaneously on the same hardware, which are interleaved in the pipeline: a first chain corresponding to observations 1-5-9-..., a second chain corresponding to observations 2-6-10-..., a third chain corresponding to observations 3-7-11-..., and a fourth chain corresponding to observations 4-8-12-....

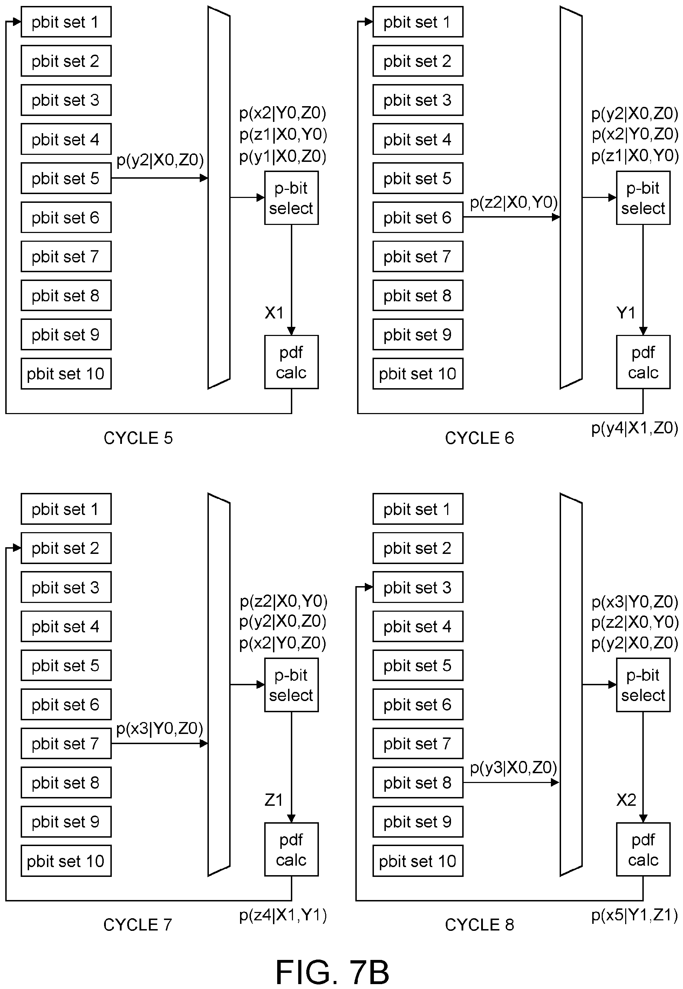

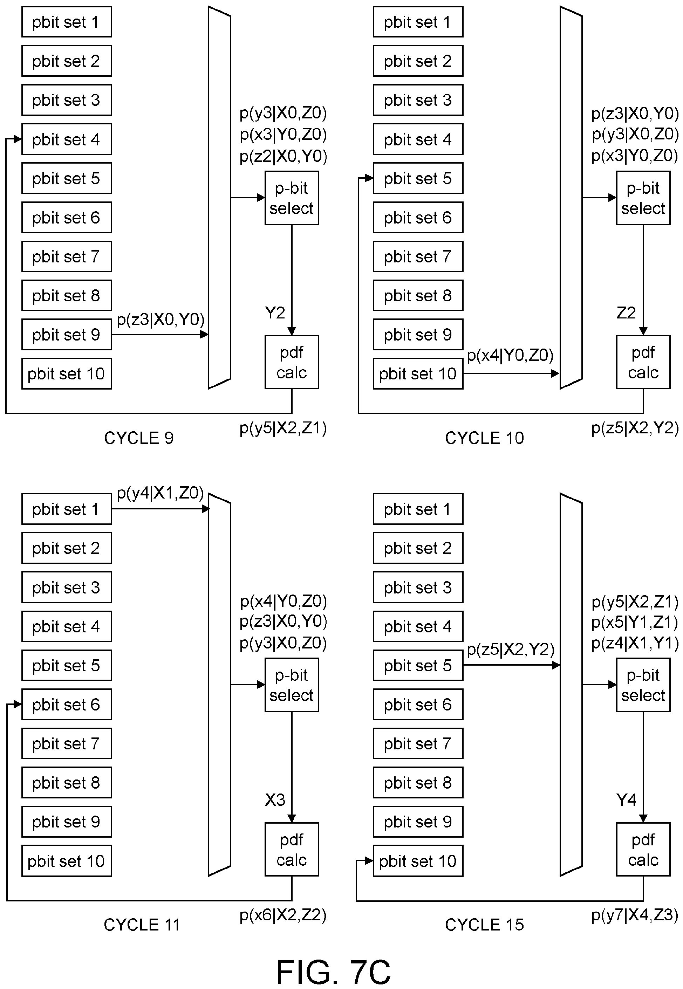

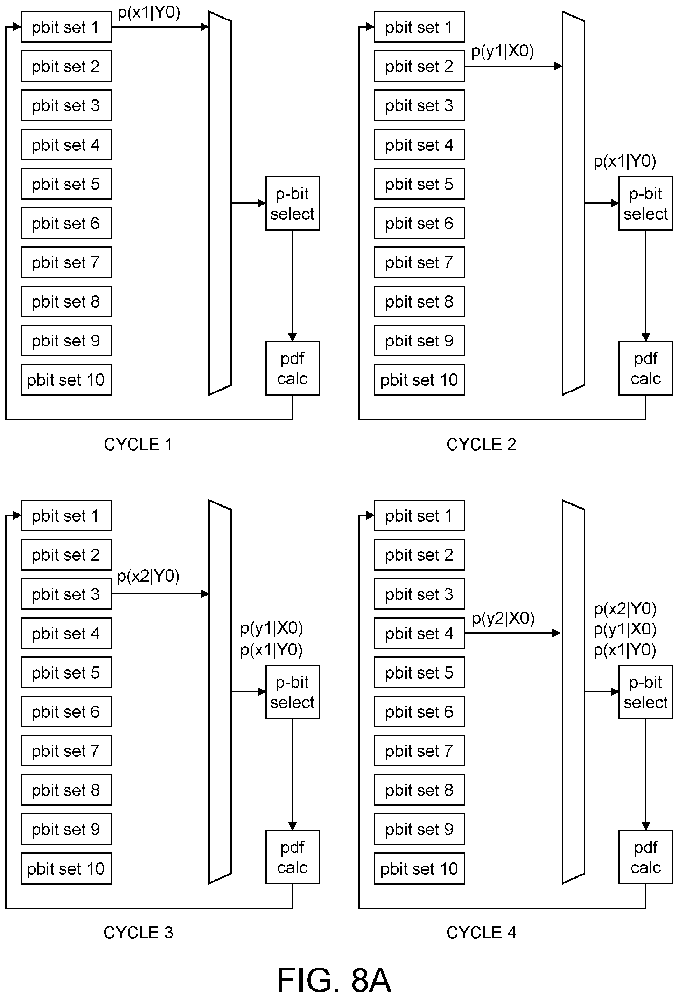

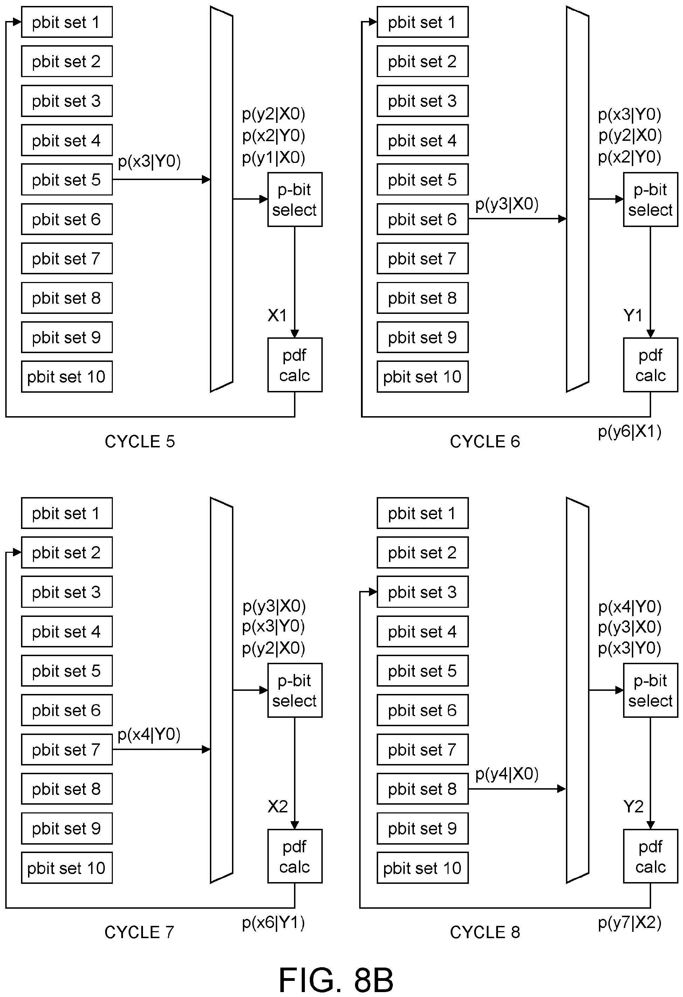

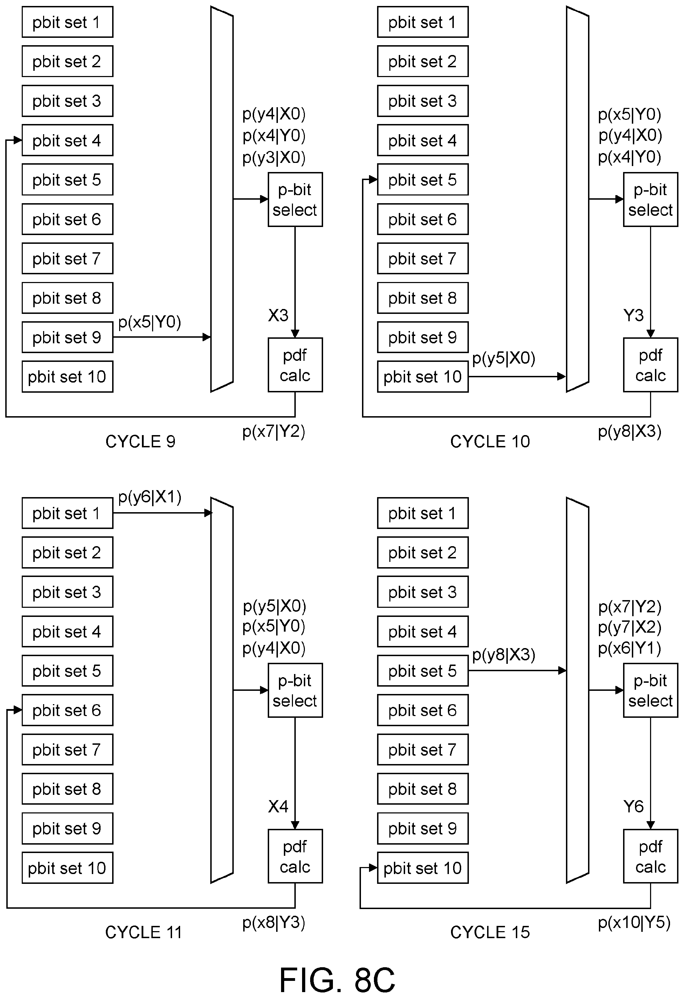

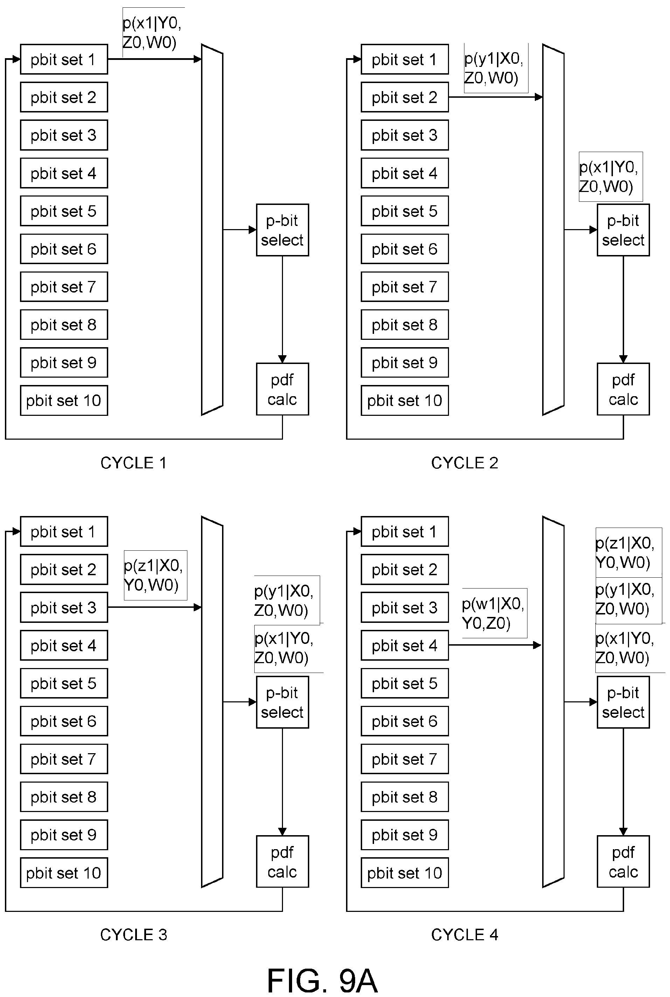

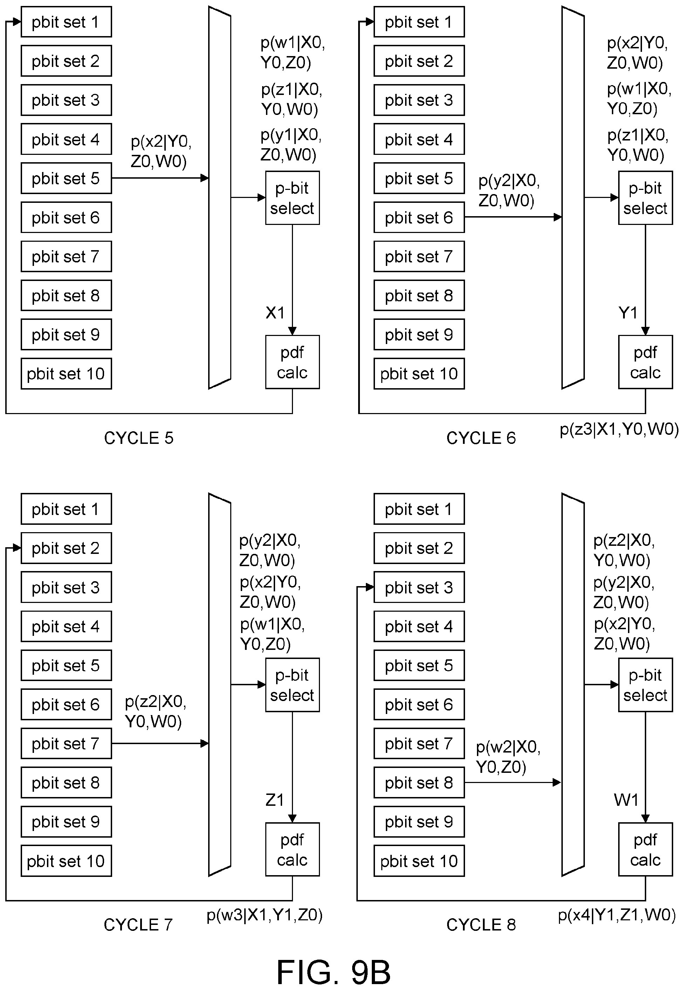

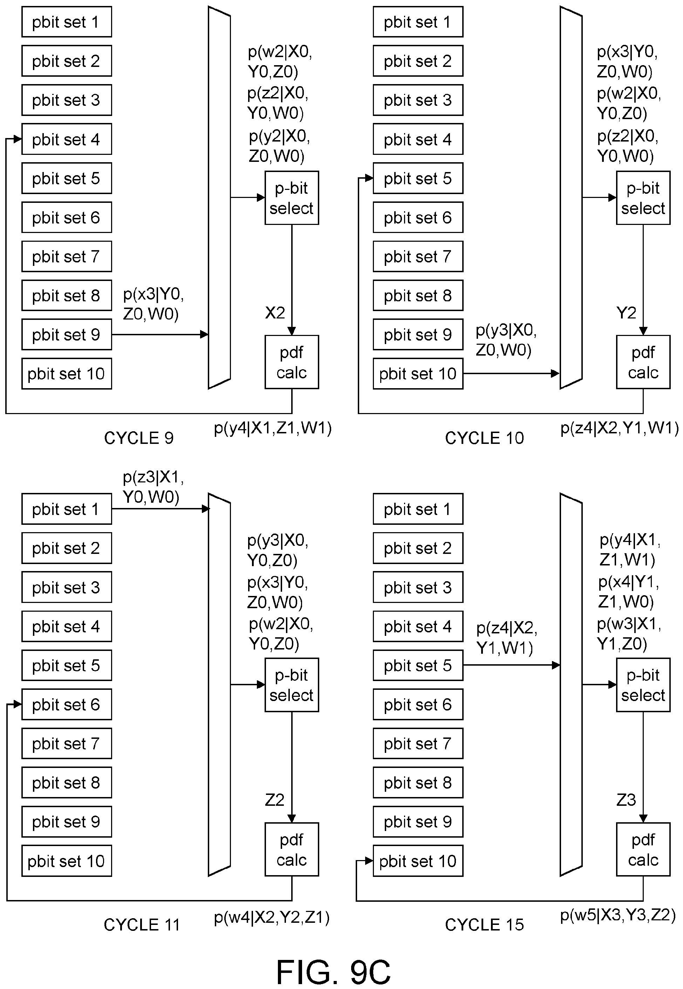

FIG. 8A-8C and FIG. 9A-9C illustrate other flows of data with respect to the HW-RNG of FIG.7, which result from the (Gibbs) sampling of alternative target distributions. In FIG. 8A-8C, the target distribution that is sampled from has the two-dimensional joint probability distribution p(x,y,), e.g. one less dimension compared to the example of FIG. 7. The alternating fashion with which the two random variables x and y enter the HW-RNG pipeline in the example of FIG. 8 is disturbed at clock cycle 11, where the same random variable enters the pipeline twice, e.g. y6 immediately following y5. During this cycle, the alternating pattern of random variables progressing along the pipeline is inversed: a flip from x->y to y->x is operated at cycle 11. Similar flips occur every tenth cycle, e.g. at cycles 21, 31, etc. For instance, at cycle 21 the previous flip is inversed again, i.e., from y->x back to y->x. The scheduling unit is not affected by this flip of random variable ordering and correctly identifies the proposal distribution that is conditionally dependent on the respective observation x or y. Note that the addition of an eleventh set of p-bit devices or the disabling of one of the sets of p-bit devices, e.g. set 10, allows to restore the regular pattern of random variable selection x->y->x->y->x->... throughout the entire Markov chain simulation. In FIG. 9A-9C, the target distribution that is sampled from has the four-dimensional joint probability distribution p(x,y,z,w), e.g. one additional dimension compared to the example of FIG. 7. In contrast to the case of two random variables, the four random variables x, y, z, and w are selected, enter and progress along the HW-RNG pipeline in a regular pattern (e.g. as x->y->z->w->x->y->z->w->x->...) throughout the entire Markov chain process.

The invention may be practiced in many ways and is not limited to the disclosed embodiments. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. A hardware random number generator (100) for drawing samples from a multivariate target distribution through simulation of a Markov chain, suitable for Markov Chain Monte Carlo (MCMC) applications, the random number generator having a pipeline architecture operating in cycles and the hardware random number generator comprising:

   sets of p-bit devices (112-1; 112-2; 112-N), the p-bit devices of each set being configured to individually generate p-bits in accordance with an adjustable expectation value,
   a programming unit (150) configured to adjust the expectation values associated with each set of p-bit devices to program the sets of p-bit devices according to a corresponding set of adaptive proposal distributions associated with the Markov chain being simulated, a programming phase associated with the programming of each set of p-bit devices by the programming unit lasting for a predetermined number of cycles, x,
   a sampling circuit (130) configured to receive the p-bits generated by a selected one of the set of p-bit devices as inputs and produce a candidate sample from the proposal distribution associated with the selected one of the sets of p-bit devices,
   selection circuitry (121) configured to select, based on a select signal, one of the sets of p-bit devices and transmit the p-bits generated by the selected one of the sets of p-bit devices to the sampling circuit,
   a scheduling unit (140) configured to perform the following steps:

      update the select signal to be applied to the selection circuitry during a next cycle, wherein the select signal is restricted to available sets of p-bit devices, not subjected to programming during the next cycle,
      accept the candidate sample with an acceptance probability, otherwise replace the candidate sample with a previously accepted candidate sample originating from the same set of p-bit devices, thus providing an output sample from the target distribution,
      recompute at least one of the proposal distributions that is conditionally dependent on the candidate sample, if accepted, and provide feedback to the programming unit by instructing the programming unit to reprogram one of the sets of p-bit devices according to recomputed at least one proposal distribution the during the next cycle,

   wherein there are N > x sets of p-bit devices.

2. The hardware random number generator of claim 1, wherein a latency period associated with the pipeline architecture of the hardware random number generator excluding the programming phase is equal to y cycles, and wherein $N \geq x+y$.

3. The hardware random number generator of any one of the preceding claims, suitable for performing single-component Metropolis-Hastings sampling, wherein the scheduling unit is configured to determine the acceptance probability as a function of the candidate sample.

4. The hardware random number generator of any one of the preceding claims, suitable for performing Gibbs sampling, wherein the scheduling unit is configured to always accept the candidate samples, the target distribution is a joint distribution $\pi(x_1, x_2, ..., x_d)$ of all d random variables of the random vector, and each proposal distributions represents the distributions of a respective random variable $x_j$ of the random vector conditional on all the other random variables, $\pi(x_j | x_1, x_2, ..., x_{j-1}, x_{j+1}, ..., x_d)$.

5. The hardware random number generator of any one of the preceding claims, wherein the scheduling unit is further configured to determine the dimension d of the random vector specified by the target distribution, determine a selection mechanism for the proposal distribution re-computation step by comparing the dimension d to the sum N+y, and select the at least one of the proposal distributions conditionally dependent on the candidate sample to be recomputed in accordance with the selection mechanism.

6. The hardware random number generator of claim 5, wherein the scheduling unit is configured to randomly pick one of the random variables and recompute the proposal distribution conditionally dependent on the candidate sample that represents the transition probability for the randomly picked random variable if $d \geq x+y$.

7. The hardware random number generator of claim 5 or 6, wherein the scheduling unit is configured to sequentially pick one of the random variables in accordance with a prescribed ordering and recompute the proposal distribution conditionally dependent on the candidate sample that represents the transition probability for the sequentially picked random variable if $d < x+y$.

8. The hardware random number generator of any one of the preceding claims, further comprising a sample buffer connected between the sampling circuit and the scheduling unit.

9. The hardware random number generator of any one of the preceding claims, wherein the scheduling unit is configured to generate selection signals such that the sets of p-bit devices are selected in turn, in a round-robin manner.

10. The hardware random number generator of any one of the preceding claims, wherein the scheduling unit is configured to generate configuration signals for instructing the programming unit to reprogram one of the sets of p-bit devices according to recomputed at least one proposal distribution such that the sets of p-bit devices to be programmed are addressed in turn, in a round-robin manner.

11. The hardware random number generator of claim 10, wherein the control signal and the select signal are relatively offset from each other by an amount of x or y cycles.

12. The hardware random number generator of any one of the preceding claims, wherein the scheduling unit is configured to provide output samples from the target distribution after a predetermined burn-in period.

13. A system comprising a plurality of hardware random number generators according to any one of the preceding claims.

14. The system of claim 13, further comprising one or more sample buffers for holding the output samples produced by the respective hardware random number generators, and a high-rank scheduling unit configured to redistribute the output samples stored in the sample buffers to the programming units of the different hardware random number generators.

FIG. 1

FIG. 2

FIG. 3

INP1

IND

DP

OUT

RBS

INP0

FIG. 4

RB0
RB1

RB2
RB3

DP

RB4
RB5

RB6
RB7

FIG. 5

FIG. 6

| | | p(x1\|Y0,Z0) | | | |
|---|---|---|---|---|---|
| pbit set 1 | | → | | | |
| pbit set 2 | | | | | |
| pbit set 3 | | | | | |
| pbit set 4 | | | | p-bit select | |
| pbit set 5 | | | | | |
| pbit set 6 | | | | | |
| pbit set 7 | | | | | |
| pbit set 8 | | | | | |
| pbit set 9 | | | | pdf calc | |
| pbit set 10 | | | | | |

CYCLE 1

| | | | | | |
|---|---|---|---|---|---|
| pbit set 1 | | | | | |
| pbit set 2 | p(y1\|X0,Z0) → | | | | |
| pbit set 3 | | | | p(x1\|Y0,Z0) | |
| pbit set 4 | | | | p-bit select | |
| pbit set 5 | | | | | |
| pbit set 6 | | | | | |
| pbit set 7 | | | | | |
| pbit set 8 | | | | | |
| pbit set 9 | | | | pdf calc | |
| pbit set 10 | | | | | |

CYCLE 2

| | | | | | |
|---|---|---|---|---|---|
| pbit set 1 | | | | | |
| pbit set 2 | | | | | |
| pbit set 3 | p(z1\|X0,Y0) → | | | p(y1\|X0,Z0) p(x1\|Y0,Z0) | |
| pbit set 4 | | | | | |
| pbit set 5 | | | | p-bit select | |
| pbit set 6 | | | | | |
| pbit set 7 | | | | | |
| pbit set 8 | | | | | |
| pbit set 9 | | | | pdf calc | |
| pbit set 10 | | | | | |

CYCLE 3

| | | | | | |
|---|---|---|---|---|---|
| pbit set 1 | | | | | |
| pbit set 2 | | | | | |
| pbit set 3 | | | | p(z1\|X0,Y0) p(y1\|X0,Z0) p(x1\|Y0,Z0) | |
| pbit set 4 | p(x2\|Y0,Z0) → | | | | |
| pbit set 5 | | | | p-bit select | |
| pbit set 6 | | | | | |
| pbit set 7 | | | | | |
| pbit set 8 | | | | | |
| pbit set 9 | | | | pdf calc | |
| pbit set 10 | | | | | |

CYCLE 4

# FIG. 7A

**CYCLE 5**

pbit set 1
pbit set 2
pbit set 3
pbit set 4
pbit set 5 $\rightarrow$ $p(y2|X0,Z0)$
pbit set 6
pbit set 7
pbit set 8
pbit set 9
pbit set 10

$p(x2|Y0,Z0)$
$p(z1|X0,Y0)$
$p(y1|X0,Z0)$

p-bit select

X1

pdf calc

**CYCLE 6**

pbit set 1
pbit set 2
pbit set 3
pbit set 4
pbit set 5
pbit set 6 $\rightarrow$ $p(z2|X0,Y0)$
pbit set 7
pbit set 8
pbit set 9
pbit set 10

$p(y2|X0,Z0)$
$p(x2|Y0,Z0)$
$p(z1|X0,Y0)$

p-bit select

Y1

pdf calc

$p(y4|X1,Z0)$

**CYCLE 7**

pbit set 1
pbit set 2
pbit set 3
pbit set 4
pbit set 5
pbit set 6
pbit set 7 $\rightarrow$ $p(x3|Y0,Z0)$
pbit set 8
pbit set 9
pbit set 10

$p(z2|X0,Y0)$
$p(y2|X0,Z0)$
$p(x2|Y0,Z0)$

p-bit select

Z1

pdf calc

$p(z4|X1,Y1)$

**CYCLE 8**

pbit set 1
pbit set 2
pbit set 3
pbit set 4
pbit set 5
pbit set 6
pbit set 7
pbit set 8 $\rightarrow$ $p(y3|X0,Z0)$
pbit set 9
pbit set 10

$p(x3|Y0,Z0)$
$p(z2|X0,Y0)$
$p(y2|X0,Z0)$

p-bit select

X2

pdf calc

$p(x5|Y1,Z1)$

## FIG. 7B

| | | p(y3|X0,Z0) |
|---|---|---|
| pbit set 1 | | p(x3|Y0,Z0) |
| pbit set 2 | | p(z2|X0,Y0) |
| pbit set 3 | | |
| pbit set 4 | | |
| pbit set 5 | | p-bit select |
| pbit set 6 | | |
| pbit set 7 | | |
| pbit set 8 | | |
| pbit set 9 | p(z3|X0,Y0) | Y2 |
| pbit set 10 | | pdf calc |

CYCLE 9      p(y5|X2,Z1)

| | | p(z3|X0,Y0) |
|---|---|---|
| pbit set 1 | | p(y3|X0,Z0) |
| pbit set 2 | | p(x3|Y0,Z0) |
| pbit set 3 | | |
| pbit set 4 | | |
| pbit set 5 | | p-bit select |
| pbit set 6 | | |
| pbit set 7 | | |
| pbit set 8 | | |
| pbit set 9 | | Z2 |
| pbit set 10 | p(x4|Y0,Z0) | pdf calc |

CYCLE 10      p(z5|X2,Y2)

p(y4|X1,Z0)

| | | p(x4|Y0,Z0) |
|---|---|---|
| pbit set 1 | | p(z3|X0,Y0) |
| pbit set 2 | | p(y3|X0,Z0) |
| pbit set 3 | | |
| pbit set 4 | | |
| pbit set 5 | | p-bit select |
| pbit set 6 | | |
| pbit set 7 | | |
| pbit set 8 | | |
| pbit set 9 | | X3 |
| pbit set 10 | | pdf calc |

CYCLE 11      p(x6|X2,Z2)

| | | p(y5|X2,Z1) |
|---|---|---|
| pbit set 1 | | p(x5|Y1,Z1) |
| pbit set 2 | | p(z4|X1,Y1) |
| pbit set 3 | | |
| pbit set 4 | | |
| pbit set 5 | p(z5|X2,Y2) | p-bit select |
| pbit set 6 | | |
| pbit set 7 | | |
| pbit set 8 | | |
| pbit set 9 | | Y4 |
| pbit set 10 | | pdf calc |

CYCLE 15      p(y7|X4,Z3)

# FIG. 7C

FIG. 8A

FIG. 8B

| | |
|---|---|
| pbit set 1 | |
| pbit set 2 | |
| pbit set 3 | p(y4\|X0) |
| pbit set 4 | p(x4\|Y0) |
| pbit set 5 | p(y3\|X0) |
| pbit set 6 | |
| pbit set 7 | p-bit select |
| pbit set 8 | |
| pbit set 9 | p(x5\|Y0) |
| pbit set 10 | X3 |

pdf calc

CYCLE 9                    p(x7\|Y2)

| | |
|---|---|
| pbit set 1 | |
| pbit set 2 | |
| pbit set 3 | p(x5\|Y0) |
| pbit set 4 | p(y4\|X0) |
| pbit set 5 | p(x4\|Y0) |
| pbit set 6 | |
| pbit set 7 | p-bit select |
| pbit set 8 | |
| pbit set 9 | |
| pbit set 10 | p(y5\|X0)   Y3 |

pdf calc

CYCLE 10                   p(y8\|X3)

| | |
|---|---|
| pbit set 1 | p(y6\|X1) |
| pbit set 2 | |
| pbit set 3 | |
| pbit set 4 | p(y5\|X0) |
| pbit set 5 | p(x5\|Y0) |
| pbit set 6 | p(y4\|X0) |
| pbit set 7 | |
| pbit set 8 | p-bit select |
| pbit set 9 | |
| pbit set 10 | X4 |

pdf calc

CYCLE 11                   p(x8\|Y3)

| | |
|---|---|
| pbit set 1 | |
| pbit set 2 | |
| pbit set 3 | p(x7\|Y2) |
| pbit set 4 | p(y7\|X2) |
| pbit set 5 | p(y8\|X3)   p(x6\|Y1) |
| pbit set 6 | |
| pbit set 7 | p-bit select |
| pbit set 8 | |
| pbit set 9 | |
| pbit set 10 | Y6 |

pdf calc

CYCLE 15                   p(x10\|Y5)

# FIG. 8C

FIG. 9A

FIG. 9B

| | |
|---|---|
| pbit set 1 | |
| pbit set 2 | p(w2\|X0, Y0,Z0) |
| pbit set 3 | p(z2\|X0, Y0,W0) |
| pbit set 4 | p(y2\|X0, Z0,W0) |
| pbit set 5 | |
| pbit set 6 | p-bit select |
| pbit set 7 | |
| pbit set 8 | |
| pbit set 9 | p(x3\|Y0, Z0,W0) → X2 |
| pbit set 10 | pdf calc |

CYCLE 9          p(y4|X1,Z1,W1)

| | |
|---|---|
| pbit set 1 | p(x3\|Y0, Z0,W0) |
| pbit set 2 | p(w2\|X0, Y0,Z0) |
| pbit set 3 | p(z2\|X0, Y0,W0) |
| pbit set 4 | |
| pbit set 5 | p-bit select |
| pbit set 6 | |
| pbit set 7 | |
| pbit set 8 | |
| pbit set 9 | Y2 |
| pbit set 10 | p(y3\|X0, Z0,W0) → pdf calc |

CYCLE 10          p(z4|X2,Y1,W1)

| | |
|---|---|
| pbit set 1 | p(z3\|X1, Y0,W0) |
| pbit set 2 | p(y3\|X0, Y0,Z0) |
| pbit set 3 | p(x3\|Y0, Z0,W0) |
| pbit set 4 | p(w2\|X0, Y0,Z0) |
| pbit set 5 | |
| pbit set 6 | p-bit select |
| pbit set 7 | |
| pbit set 8 | |
| pbit set 9 | Z2 |
| pbit set 10 | pdf calc |

CYCLE 11          p(w4|X2,Y2,Z1)

| | |
|---|---|
| pbit set 1 | |
| pbit set 2 | p(y4\|X1, Z1,W1) |
| pbit set 3 | p(x4\|Y1, Z1,W0) |
| pbit set 4 | p(w3\|X1, Y1,Z0) |
| pbit set 5 | p(z4\|X2, Y1,W1) → p-bit select |
| pbit set 6 | |
| pbit set 7 | |
| pbit set 8 | |
| pbit set 9 | Z3 |
| pbit set 10 | pdf calc |

CYCLE 15          p(w5|X3,Y3,Z2)

# FIG. 9C

Europäisches
Patentamt
European
Patent Office
Office européen
des brevets

# EUROPEAN SEARCH REPORT

**Application Number**

EP 24 22 3554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KAISER J ET AL: "Life is probabilistic - why should all our computers be deterministic? Computing with p-bits: Ising Solvers and Beyond", 2022 INTERNATIONAL ELECTRON DEVICES MEETING (IEDM), IEEE, 3 December 2022 (2022-12-03), XP034280847, DOI: 10.1109/IEDM45625.2022.10019548 [retrieved on 2023-01-23] * figures 1, 2, 6 * * Sections II-VI * | 1-14 | INV. G06F7/58 G06N7/01 |
| A | FU YIHAN ET AL: "Probabilistic Compute-in-Memory Design for Efficient Markov Chain Monte Carlo Sampling", IEEE TRANSACTIONS ON CIRCUITS AND SYSTEMS I: REGULAR PAPERS, IEEE, US, vol. 71, no. 2, 1 February 2024 (2024-02-01), pages 703-716, XP011959135, ISSN: 1549-8328, DOI: 10.1109/TCSI.2023.3337529 [retrieved on 2023-12-07] * Sections II-V * | 1-14 | |
| A | WO 2024/200771 A1 (IMPERIAL COLLEGE INNOVATIONS LTD [GB]) 3 October 2024 (2024-10-03) * the whole document * | 1-14 | |

**TECHNICAL FIELDS SEARCHED (IPC)**

G06F
G06N

The present search report has been drawn up for all claims

| Place of search | Date of completion of the search | Examiner |
|---|---|---|
| Munich | 10 June 2025 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                              
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3554

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| WO 2024200771 A1 | 03-10-2024 | GB 2628655 A<br>WO 2024200771 A1 | 02-10-2024<br>03-10-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23216348 A

- EP 23216705 A

**Non-patent literature cited in the description**

- **P. DEBASHIS et al.** Gaussian Random Number Generator With Reconfigurable Mean and Variance Using Stochastic Magnetic Tunnel Junctions. *IEEE Magnetics Letters*, 2022, vol. 13, 1-5